(19) Europäisches Patentamt / European Patent Office / Office européen des brevets

(11) **EP 2 966 920 A1**

(12) **EUROPEAN PATENT APPLICATION**
published in accordance with Art. 153(4) EPC

(43) Date of publication:
**13.01.2016 Bulletin 2016/02**

(51) Int Cl.:
***H04W 72/04*** (2009.01)

(21) Application number: **13881954.5**

(22) Date of filing: **08.04.2013**

(86) International application number:
**PCT/CN2013/073876**

(87) International publication number:
**WO 2014/166046 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **NAN, Fang**
 **Shenzhen**
 **Guangdong 518129 (CN)**

• **YU, Zheng**
 **Shenzhen**
 **Guangdong 518129 (CN)**
• **QU, Bingyu**
 **Shenzhen**
 **Guangdong 518129 (CN)**

(74) Representative: **Epping - Hermann - Fischer**
**Patentanwaltsgesellschaft mbH**
**Schloßschmidstraße 5**
**80639 München (DE)**

(54) **METHOD FOR SENDING AND RECEIVING RANDOM ACCESS PREAMBLE, AND CORRESPONDING DEVICE**

(57) The present invention discloses a method for sending and receiving a random access preamble, and a corresponding device. The method includes: receiving, by a user equipment UE, a first physical random access channel PRACH configuration index sent by a base station, where the first PRACH configuration index is used to indicate at least two PRACH resource configurations; selecting, by the UE according to a channel characteristic value of the UE, a first PRACH resource configuration from the at least two PRACH resource configurations indicated by the first PRACH configuration index; and sending, by the UE to the base station, a random access preamble on a PRACH resource corresponding to the first PRACH resource configuration. Therefore, for UEs that have different channel characteristic values, PRACH resources corresponding to the channel characteristic values of the UEs and that are used to send random access preambles can be determined by using a same index, and thereby, PRACH resource configuration efficiency is improved, and accuracy of receiving random access preambles by the base station is improved.

Receive a first physical random access channel PRACH configuration index sent by a base station, where the first PRACH configuration index is used to indicate at least two PRACH resource configurations — 101

Select, according to a channel characteristic value of the UE, a first PRACH resource configuration from the at least two PRACH resource configurations indicated by the first PRACH configuration index — 102

Send a random access preamble on a PRACH resource corresponding to the first PRACH resource configuration to the base station — 103

FIG. 1

EP 2 966 920 A1

**Description**

**TECHNICAL FIELD**

The present invention relates to the field of communications, and in particular, to a method for sending and receiving a random access preamble, and a corresponding device.

**BACKGROUND**

In a wireless communications system, a user equipment (User Equipment, UE) needs to establish a connection with a network, and this process is generally called random access. A channel on which the UE sends a random access preamble is a physical random access channel (Physical Random Access Channel, PRACH).

Using a Long Term Evolution (Long Term Evolution, LTE) system as an example, a channel on which a UE sends a preamble to an evolved base station (Evolutional Node B, eNodeB) is a PRACH, where the preamble includes a cyclic prefix (Cyclic Prefix, CP) and a sequence, and a guard period is added after the preamble. A preamble used in a conventional PRACH has five formats, and PRACH resources include time-domain resources and frequency-domain resources. A PRACH time-domain resource includes a symbol, a subframe, a timeslot, and/or a system frame occupied by a PRACH preamble and a guard period. A PRACH frequency-domain resource includes a subcarrier and/or a resource block (Resource Block, RB) occupied by a PRACH preamble and a guard period. PRACH resources may also be called PRACH opportunities.

A random access procedure includes two modes, a contention mode and a non-contention mode. In a contention random access procedure, an eNodeB configures, by using radio resource control (Radio Resource Control, RRC) common signaling, a preamble used by a UE to perform random access and available time-frequency resources used by the UE to send a random access preamble. The UE randomly selects a preamble, and performs access on a random time-frequency resource. Therefore, a result of such access has randomicity, and 100% success cannot be ensured. In a non-contention random access procedure, a preamble sent by a UE and a time-frequency resource for sending the preamble are specified by a base station by using RRC dedicated signaling.

In an actual application, a use condition or a channel condition of a UE varies, but this case is not considered in the current random access procedure. Consequently, when the UE sends a preamble in some channel conditions, a problem that a base station always fails to receive the preamble properly or receives the preamble at very low efficiency is caused.

**SUMMARY**

Embodiments of the present invention provide a method for sending and receiving a random access preamble, and a corresponding device, which can configure PRACH resources corresponding to conditions of channel characteristics of UEs for the UEs in different conditions of channel characteristics, and improve accuracy of receiving random access preambles by a base station.

According to a first aspect, a method for sending a random access preamble is provided, where the method includes: receiving, by a user equipment UE, a first physical random access channel PRACH configuration index sent by a base station, where the first PRACH configuration index is used to indicate at least two PRACH resource configurations; selecting, according to a channel characteristic value of the UE, a first PRACH resource configuration from the at least two PRACH resource configurations indicated by the first PRACH configuration index; and sending to the base station a random access preamble on a PRACH resource corresponding to the first PRACH resource configuration.

With reference to the first aspect and the foregoing implementation manner of the first aspect, in another implementation manner of the first aspect, the UE stores random access configuration information, or the UE receives random access configuration information sent by a network-side device; where the random access configuration information reflects a correspondence between each PRACH configuration index in at least one PRACH configuration index and at least two PRACH resource configurations indicated by each PRACH configuration index.

With reference to the first aspect and the foregoing implementation manner of the first aspect, in another implementation manner of the first aspect, each of the at least two PRACH resource configurations indicated by each PRACH configuration index corresponds to a channel characteristic range, and the selecting, according to a channel characteristic value of the UE, a first PRACH resource configuration from the at least two PRACH resource configurations indicated by the first PRACH configuration index includes: determining, according to the random access configuration information, the at least two PRACH resource configurations indicated by the first PRACH configuration index; and determining, according to the channel characteristic value of the UE, a PRACH resource configuration corresponding to a channel characteristic range that the channel characteristic value of the UE falls within, and using the PRACH resource configuration as the first PRACH resource configuration.

With reference to the first aspect and the foregoing implementation manner of the first aspect, in another implementation manner of the first aspect, the UE stores correspondences between the at least two PRACH resource configurations indicated by each PRACH configuration index and the channel characteristic ranges; or the UE acquires, from the network-side device, correspondences between the at least two PRACH resource configurations indicated by each PRACH configuration index and the channel characteristic ranges.

With reference to the first aspect and the foregoing implementation manners of the first aspect, in another implementation manner of the first aspect, the random access configuration information is a random access configuration table.

With reference to the first aspect and the foregoing implementation manners of the first aspect, in another implementation manner of the first aspect, the random access configuration information includes a correspondence between each PRACH resource configuration and a PRACH resource corresponding to the PRACH resource configuration.

According to a second aspect, a method for receiving a random access preamble is provided, where the method includes: sending, by a base station, a first physical random access channel PRACH configuration index to a user equipment UE, where the first PRACH configuration index is used to indicate at least two PRACH resource configurations, so that the UE selects, according to a channel characteristic value of the UE, a first PRACH resource configuration from the at least two PRACH resource configurations indicated by the first PRACH configuration index; and detecting, by the base station on a PRACH resource corresponding to each of the at least two PRACH resource configurations, a random access preamble sent by the UE.

With reference to the second aspect and the foregoing implementation manner of the second aspect, in another implementation manner of the second aspect, the base station stores random access configuration information, where the random access configuration information reflects a correspondence between each PRACH configuration index in at least one PRACH configuration index and at least two PRACH resource configurations indicated by each PRACH configuration index.

With reference to the second aspect and the foregoing implementation manner of the second aspect, in another implementation manner of the second aspect, each of the at least two PRACH resource configurations indicated by each PRACH configuration index corresponds to a channel characteristic range.

With reference to the second aspect and the foregoing implementation manner of the second aspect, in another implementation manner of the second aspect, the method further includes: sending, by the base station to the UE, correspondences between the at least two PRACH resource configurations indicated by each PRACH configuration index and the channel characteristic ranges.

With reference to the second aspect and the foregoing implementation manners of the second aspect, in another implementation manner of the second aspect, the random access configuration information is a random access configuration table.

With reference to the second aspect and the foregoing implementation manners of the second aspect, in another implementation manner of the second aspect, the random access configuration information includes a correspondence between each PRACH resource configuration and a PRACH resource corresponding to the PRACH resource configuration.

According to a third aspect, a user equipment is provided, where the user equipment includes: receiving unit, configured to receive a first physical random access channel PRACH configuration index sent by a base station, where the first PRACH configuration index is used to indicate at least two PRACH resource configurations; a selecting unit, configured to select, according to a channel characteristic value of the UE, a first PRACH resource configuration from the at least two PRACH resource configurations indicated by the first PRACH configuration index received by the receiving unit; and a sending unit, configured to send a random access preamble on a PRACH resource corresponding to the first PRACH resource configuration selected by the selecting unit to the base station.

With reference to the third aspect and the foregoing implementation manner of the third aspect, in another implementation manner of the third aspect, the user equipment further includes a storing unit, where: the storing unit is configured to store random access configuration information; or the receiving unit is further configured to receive random access configuration information sent by a network-side device; where the random access configuration information reflects a correspondence between each PRACH configuration index in at least one PRACH configuration index and at least two PRACH resource configurations indicated by each PRACH configuration index.

With reference to the third aspect and the foregoing implementation manner of the third aspect, in another implementation manner of the third aspect, each of the at least two PRACH resource configurations indicated by each PRACH configuration index corresponds to a channel characteristic range; and the selecting unit is specifically configured to: determine, according to the random access configuration information, the at least two PRACH resource configurations indicated by the first PRACH configuration index; and determine, according to the channel characteristic value of the UE, a PRACH resource configuration corresponding to a channel characteristic range that the channel characteristic value of the UE falls within, and use the PRACH resource configuration as the first PRACH resource configuration.

With reference to the third aspect and the foregoing implementation manner of the third aspect, in another implementation manner of the third aspect, the storing unit is further configured to store correspondences between the at least two PRACH resource configurations indicated by each PRACH configuration index and the channel characteristic ranges; or the receiving unit is further configured to acquire, from the network-side device, correspondences between the at least two PRACH resource configurations indicated by each PRACH configuration index and the channel characteristic ranges.

With reference to the third aspect and the foregoing implementation manners of the third aspect, in another implementation manner of the third aspect, the random access configuration information is a random access configuration table.

With reference to the third aspect and the foregoing implementation manners of the third aspect, in another implementation manner of the third aspect, the random access configuration information includes a correspondence between each PRACH resource configuration and a PRACH resource corresponding to the PRACH resource configuration.

According to a fourth aspect, a base station is provided, where the base station includes: a sending unit, configured to send a first physical random access channel PRACH configuration index to a user equipment UE, where the first PRACH configuration index is used to indicate at least two PRACH resource configurations, so that the UE selects, according to a channel characteristic value of the UE, a first PRACH resource configuration from the at least two PRACH resource configurations indicated by the first PRACH configuration index; and a detecting unit, configured to detect, on a PRACH resource corresponding to each of the at least two PRACH resource configurations indicated by the first PRACH configuration index sent by the sending unit, a random access preamble sent by the UE.

With reference to the fourth aspect and the foregoing implementation manner of the fourth aspect, in another implementation manner of the fourth aspect, the base station further includes a storing unit, where: the storing unit is configured to store random access configuration information, where the random access configuration information reflects a correspondence between each PRACH configuration index in at least one PRACH configuration index and at least two PRACH resource configurations indicated by each PRACH configuration index.

With reference to the fourth aspect and the foregoing implementation manner of the fourth aspect, in another implementation manner of the fourth aspect, each of the at least two PRACH resource configurations indicated by each PRACH configuration index corresponds to a channel characteristic range.

With reference to the fourth aspect and the foregoing implementation manner of the fourth aspect, in another implementation manner of the fourth aspect, the sending unit is further configured to send correspondences between the at least two PRACH resource configurations indicated by each PRACH configuration index and the channel characteristic ranges to the UE.

With reference to the fourth aspect and the foregoing implementation manners of the fourth aspect, in another implementation manner of the fourth aspect, the random access configuration information is a random access configuration table.

With reference to the fourth aspect and the foregoing implementation manners of the fourth aspect, in another implementation manner of the fourth aspect, the random access configuration information includes a correspondence between each PRACH resource configuration and a PRACH resource corresponding to the PRACH resource configuration.

According to a fifth aspect, a user equipment is provided, where the user equipment includes: a receiver, configured to receive a first physical random access channel PRACH configuration index sent by a base station, where the first PRACH configuration index is used to indicate at least two PRACH resource configurations; a processor, configured to select, according to a channel characteristic value of the UE, a first PRACH resource configuration from the at least two PRACH resource configurations indicated by the first PRACH configuration index received by the receiver; and a transmitter, configured to send a random access preamble on a PRACH resource corresponding to the first PRACH resource configuration selected by the processor to the base station.

With reference to the fifth aspect and the foregoing implementation manner of the fifth aspect, in another implementation manner of the fifth aspect, the user equipment further includes a memory, where: the memory is configured to store random access configuration information; or the receiver is further configured to receive random access configuration information sent by a network-side device; where the random access configuration information reflects a correspondence between each PRACH configuration index in at least one PRACH configuration index and at least two PRACH resource configurations indicated by each PRACH configuration index.

With reference to the fifth aspect and the foregoing implementation manner of the fifth aspect, in another implementation manner of the fifth aspect, each of the at least two PRACH resource configurations indicated by each PRACH configuration index corresponds to a channel characteristic range; and the processor is specifically configured to: determine, according to the random access configuration information, the at least two PRACH resource configurations indicated by the first PRACH configuration index; and determine, according to the channel characteristic value of the UE, a PRACH resource configuration corresponding to a channel characteristic range that the channel characteristic value of the UE falls within, and use the PRACH resource configuration as the first PRACH resource configuration.

With reference to the fifth aspect and the foregoing implementation manner of the fifth aspect, in another implementation manner of the fifth aspect, the memory stores correspondences between the at least two PRACH resource configurations indicated by each PRACH configuration index and the channel characteristic ranges; or the receiver is further configured to acquire, from the network-side device, correspondences between the at least two PRACH resource configurations indicated by each PRACH configuration index and the channel characteristic ranges.

With reference to the fifth aspect and the foregoing implementation manners of the fifth aspect, in another implementation manner of the fifth aspect, the random access configuration information is a random access configuration table.

With reference to the fifth aspect and the foregoing implementation manners of the fifth aspect, in another implementation manner of the fifth aspect, the random access configuration information includes a correspondence between each PRACH resource configuration and a PRACH resource corresponding to the PRACH resource configuration.

According to a sixth aspect, a base station is provided, where the base station includes: a transmitter, configured to send a first physical random access channel PRACH configuration index to a user equipment UE, where the first PRACH configuration index is used to indicate at least two PRACH resource configurations, so that the UE selects, according to a channel characteristic value of the UE, a first PRACH resource configuration from the at least two PRACH resource configurations indicated by the first PRACH configuration index; and a processor, configured to detect, on a PRACH resource corresponding to each of the at least two PRACH resource configurations indicated by the first PRACH configuration index sent by the transmitter, a random access preamble sent by the UE.

With reference to the sixth aspect and the foregoing implementation manner of the sixth aspect, in another implementation manner of the sixth aspect, the base station further includes a memory, where: the memory is configured to store random access configuration information, where the random access configuration information reflects a correspondence between each PRACH configuration index in at least one PRACH configuration index and at least two PRACH resource configurations indicated by each PRACH configuration index.

With reference to the sixth aspect and the foregoing implementation manner of the sixth aspect, in another implementation manner of the sixth aspect, each of the at least two PRACH resource configurations indicated by each PRACH configuration index corresponds to a channel characteristic range.

With reference to the sixth aspect and the foregoing implementation manner of the sixth aspect, in another implementation manner of the sixth aspect, the transmitter is further configured to send correspondences between the at least two PRACH resource configurations indicated by each PRACH configuration index and the channel characteristic ranges to the UE.

With reference to the sixth aspect and the foregoing implementation manners of the sixth aspect, in another implementation manner of the sixth aspect, the random access configuration information is a random access configuration table.

With reference to the sixth aspect and the foregoing implementation manners of the sixth aspect, in another implementation manner of the sixth aspect, the random access configuration information includes a correspondence between each PRACH resource configuration and a PRACH resource corresponding to the PRACH resource configuration.

Based on the foregoing technical solutions, in the embodiments of the present invention, a UE receives a PRACH configuration index sent by a base station, where the PRACH configuration index is used to indicate at least two PRACH resource configurations; and the UE selects, according to a channel characteristic value of the UE, a first PRACH resource configuration from the at least two PRACH resource configurations indicated by the first PRACH configuration index, and sends a random access preamble on a PRACH resource corresponding to the selected first PRACH resource configuration to the base station. Therefore, for UEs having different channel characteristic values, PRACH resources corresponding to the channel characteristic values of the UEs and used to send random access preambles can be determined by using a same index, and thereby, PRACH resource configuration efficiency is improved, and accuracy of receiving random access preambles by the base station is improved.

## BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a flowchart of a method for configuring a physical random access channel resource according to an embodiment of the present invention;

FIG. 2A is a schematic diagram of a random access preamble format according to an embodiment of the present invention;

FIG. 2B is a schematic diagram of a random access preamble format according to another embodiment of the present invention;

FIG. 3A is a schematic diagram of bit indications of positions of PRACH resources according to an embodiment of the present invention;

FIG. 3B is a schematic diagram of bit indications of positions of PRACH resources according to another embodiment of the present invention;

FIG. 3C is a schematic diagram of bit indications of positions of PRACH resources according to still another embodiment of the present invention;

FIG. 4 is a flowchart of a method for configuring a physical random access channel resource according to another embodiment of the present invention;

FIG. 5A is a schematic diagram of bit indications of positions of PRACH resources according to still another embodiment of the present invention;

FIG. 5B is a schematic diagram of bit indications of positions of PRACH resources according to still another embodiment of the present invention;

FIG. 6 is a structural block diagram of a user equipment according to an embodiment of the present invention;

FIG. 7 is a structural block diagram of a base station according to an embodiment of the present invention;

FIG. 8 is a block diagram of a device according to an embodiment of the present invention;

FIG. 9 is a structural block diagram of a user equipment according to another embodiment of the present invention; and

FIG. 10 is a structural block diagram of a base station according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the embodiments of the present invention, a problem that when a preamble is sent in a conventional random access procedure in some channel conditions, a base station always fails to receive the preamble properly or receives the preamble at very low efficiency is fully considered. Multiple (at least two) PRACH resource configurations are implemented according to different channel conditions, so that before a UE sends a random access preamble, the UE determines a proper PRACH resource configuration according to a channel characteristic value, and further sends the random access preamble on a corresponding PRACH resource. Thereby, the problem that when a preamble is sent in some channel conditions, the base station always fails to receive the preamble properly or receives the preamble at very low efficiency is solved.

It should be understood that, the technical solutions of the embodiments of the present invention may be applied to various communications systems, such as: a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, an LTE time division duplex (Time Division Duplex, TDD), a Universal Mobile Telecommunications System (Universal Mobile Telecommunication System, UMTS), or a Worldwide Interoperability for Microwave Access (Worldwide Interoperability for Microwave Access, WiMAX) communications system.

It should also be understood that in the embodiments of the present invention, a user equipment may be referred to as a terminal (Terminal), a mobile station (Mobile Station, MS), a mobile terminal (Mobile Terminal), and the like. The user equipment may communicate with one or more core networks through a radio access network (Radio Access Network, RAN). For example, the user equipment may be a mobile phone (also referred to as a "cellular" phone), a computer with a mobile terminal, a machine type communication (Machine Type Communication, MTC) terminal, and the like. For example, the user equipment may also be a portable, pocket-sized, handheld, computer built-in, or in-vehicle mobile apparatus, which exchanges voice and/or data with the radio access network.

In the embodiments of the present invention, a base station may be a base station (Base Transceiver Station, BTS) in the GSM or CDMA, a base station (NodeB, NB) in the WCDMA, or an e-NodeB in the LTE, which is not limited in the present invention. However, for ease of description, the following embodiments are described by using the eNodeB as an example.

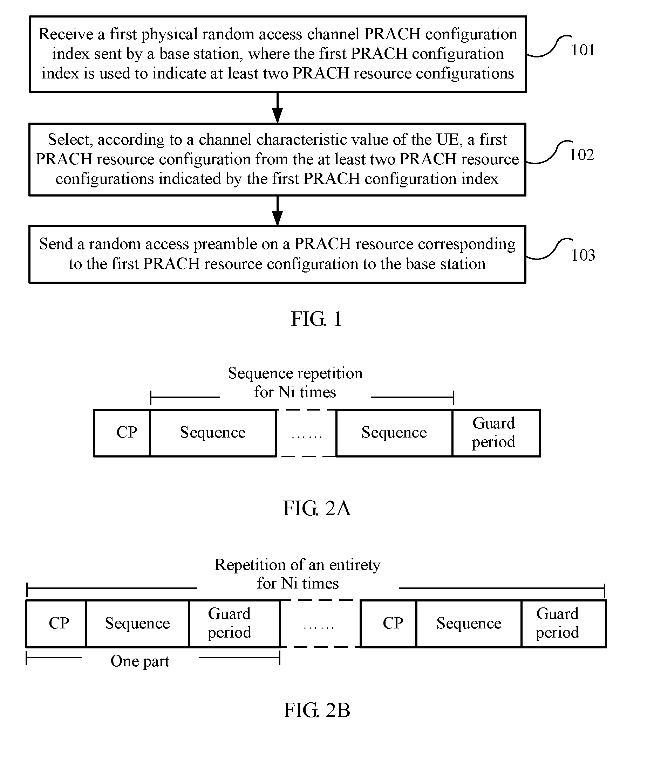

In an implementation manner, a base station notifies a UE of a corresponding PRACH resource configuration by using a PRACH configuration index. The UE prestores a correspondence between the PRACH configuration index and PRACH resource configurations indicated by the PRACH configuration index. In addition, the UE may obtain a channel characteristic value of the UE through measurement, and further select a proper PRACH resource configuration according to the channel characteristic value. A detailed description is provided below with reference to FIG. 1.

FIG. 1 is a flowchart of a method for sending a random access preamble according to an embodiment of the present invention. The method in FIG. 1 is executed by a UE.

101. Receive a first physical random access channel PRACH configuration index sent by a base station, where the first PRACH configuration index is used to indicate at least two PRACH resource configurations.

102. Select, according to a channel characteristic value of the UE, a first PRACH resource configuration from the at least two PRACH resource configurations indicated by the first PRACH configuration index.

103. Send a random access preamble on a PRACH resource corresponding to the first PRACH resource configuration to the base station.

Based on the foregoing technical solution, in the embodiments of the present invention, a UE receives a PRACH configuration index sent by a base station, where the PRACH configuration index is used to indicate at least two PRACH resource configurations; and the UE selects, according to a channel characteristic value of the UE, a first PRACH resource configuration from the at least two PRACH resource configurations indicated by the first PRACH configuration index, and sends a random access preamble on a PRACH resource corresponding to the selected first PRACH resource configuration to the base station. Therefore, for UEs having different channel characteristic values, PRACH resources corresponding to the channel characteristic values of the UEs and used to send random access preambles can be determined by using a same index, and thereby, PRACH resource configuration efficiency is improved, and accuracy of receiving random access preambles by the base station is improved.

Optionally, in an embodiment, a channel characteristic may include one or more of the following: reference signal received power (Reference Signal Received Power, RSRP), reference signal received quality (Reference Signal Received Quality, RSRQ), path loss, channel quality indicator (Channel Quality Indicator, CQI), and the like. For ease of description, the channel characteristic in the embodiment of the present invention is described by using the path loss as an example. It should be understood that the embodiment of the present invention is not limited thereto.

Optionally, before step 102, a network-side device may divide channel characteristic values into N ranges, where N is a positive integer, and the N ranges are corresponding to different preamble formats. Certainly, a channel characteristic range may also be a channel characteristic value. Further, each range may be corresponding to a quantity of repetitions of a sequence, which refers to a quantity of times of sending a repeated sequence every time. Optionally, the network-side device may send information of the N channel characteristic ranges to the UE. For example, the UE may obtain the information of the N channel characteristic ranges by receiving one or more messages of an RRC common signaling message, a media access control (Media Access Control, MAC) control element (Control Element, CE) message, and a physical layer message that are sent by an eNodeB. Optionally, the UE and the network-side device (such as the eNodeB) may pre-agree on index numbers of the N channel characteristic ranges.

For example, path loss values are divided into four ranges, which are respectively as follows: A path loss range indicated by a range index 1 is x0dB<path loss value≤x1dB (corresponding to a preamble format 5, and a quantity of repetitions of the preamble format 5 is N1); a path loss range indicated by a range index 2 is x1dB<path loss value<x2dB (corresponding to a preamble format 6, and a quantity of repetitions of the preamble format 6 is N2); a path loss range indicated by a range index 3 is x2dB<path loss value≤x3dB (corresponding to a preamble format 7, and a quantity of repetitions of the preamble format 7 is N3); a path loss range indicated by a range index 4 is path loss value>x3dB (corresponding to a preamble format 8, and a quantity of repetitions of the preamble format 8 is N4); and a path loss range indicated by a range index 0 is path loss value≤x0dB and corresponding to preamble formats 0-4 (which is not further described herein in the embodiment of the present invention, and reference may be made to the prior art). The path loss ranges may be expressed in a table form as follows:

**Table 1 N ranges divided from a path loss value and corresponding preamble formats**

| Path loss range index | 0 | 1 | 2 | 3 | 4 |
|---|---|---|---|---|---|
| Path loss range (dB) | Path loss value≤x0 dB | x0dB<path loss value≤x1dB | x1dB<path loss value≤x2dB | x2dB<path loss value≤x3dB | Path loss value>x3dB |
| Quantity of repetitions | -- | N1 | N2 | N3 | N4 |
| Preamble format | 0–4 | 5 | 6 | 7 | 8 |

Further, random access preamble parameters corresponding to the preamble formats may be expressed in a table form as follows:

**Table 2 Random access preamble parameters**

| Preamble format | $T_{CP}$ | $T_{SEQ}$ |
|---|---|---|
| 0 | $3168*T_S$ | $24567*T_S$ |
| 1 | $21024*Ts$ | $24567*T_S$ |
| 2 | $6240*T_S$ | $2*24567*T_S$ |
| 3 | $21024*T_S$ | $2*24567*T_S$ |
| 4 | $448*T_S$ | $4096*T_S$ |
| 5 | $6240*T_S$ | $N1*24567*T_S$ |
| 6 | $6240*T_S$ | $N2*24567*T_S$ |
| 7 | $6240*T_S$ | $N3*24567*T_S$ |
| 8 | $6240*T_S$ | $N4*24567*T_S$ |

As shown in Table 2, preamble formats 5-8 are preamble formats newly defined for four channel characteristic ranges in Table 1. CP lengths of the preamble formats 5-8 may be selected to be consistent with a CP length of a preamble format 2, and are all $6240*T_S$ (Ts is a time unit, for example, Ts=1/(15000*2048) seconds); in the preamble formats 5-8, a sequence is repeated for N1, N2, N3, and N4 times respectively, that is, lengths of the sequence are respectively $N1*24567*T_S$, $N2*24567*T_S$, $N3*24567*T_S$, and $N4*24567*T_S$; lengths of guard periods of the preamble formats 5-8 may be $6048s*T_S$. Optionally, assuming that the quantity of repetitions of the sequence is Ni, a format of the random access preamble sent by the UE is shown in FIG. 2A. A quantity of subframes occupied by a PRACH resource carrying a preamble of a preamble format whose quantity of repetitions is Ni may be expressed as:

$$Mi=ceil((Ni*24567*T_S+6240*T_S+6048s*T_S)*1000)$$

where, ceil() indicates a round-up operation.

For example, the quantity of subframes occupied by a PRACH resource carrying a preamble of the format 5 is:

$$M1 = ceil((N1*24567*T_S + 6240*T_S + 6048s*T_S)*1000)$$

Certainly, the format of the random access preamble sent by the UE may also be repetition of an entirety of a preamble and a guard period, as shown in FIG. 2B. It should be understood that the embodiment of the present invention is not limited thereto. In this case, a length from a CP to a subsequent first guard period is called one part. Optionally, parts may be discontinuous in time. A quantity of subframes included from the CP of the first part to a guard period of a last part in the preamble format is a quantity of subframes occupied by a PRACH resource of the preamble format.

The quantity of repetitions may be predefined by the base station and the UE, for example, defined in a communications protocol specification, or notified explicitly or implicitly by the base station to the UE by using signaling.

It should be understood that the quantity of divided channel characteristic ranges, index numbers, random access preamble parameters, expression forms, and the like in the foregoing instances are only exemplary, but not intended to limit the scope of the present invention.

In a scenario of a severe path loss, for example, in a case in which an MTC UE (such as an intelligent instrument) is installed in a basement or isolated by a metal crust, a path loss value between the MTC UE and a base station increases additionally by 20dB. If the solution in the prior art is used to send a preamble of one format in formats 0-4, the base station cannot detect the preamble sent by the UE, or a probability of proper detection is very low even if the preamble sent by the UE is detected.

By using the foregoing solution, UEs in a same cell use corresponding PRACH preamble formats and resource configurations according to channel characteristic ranges that channel characteristic values fall within, for example, UEs in different coverage areas use corresponding preamble formats and PRACH resource configurations according to path loss ranges that path loss values between the UEs and a base station fall within, which may ensure performance of the base station in detecting a random access preamble in a scenario of a severe path loss. In addition, a same PRACH configuration index sent by the base station is used to indicate multiple PRACH resource configurations corresponding to the channel characteristic range, and thereby PRACH resources corresponding to conditions of channel characteristics of UEs can be efficiently configured for the UEs in different conditions of channel characteristics.

Optionally, in another embodiment, in step 101, the UE may receive, by using RRC common signaling, the first PRACH configuration index sent by the base station. PRACH resource configurations indicated by the first PRACH configuration index may be PRACH time-domain resource configurations or PRACH frequency-domain resource configurations. For example, the first PRACH configuration index indicates PRACH time-domain resource configurations of the preamble formats 5-8, that is, one PRACH configuration index indicates PRACH resource configurations of four preamble formats, where the four PRACH resource configurations are corresponding to different channel characteristic ranges.

Optionally, in another embodiment, within a predefined time span and/or frequency bandwidth, a fixed difference or ratio may exist between PRACH resource quantities corresponding to at least two PRACH resource configurations. For example, within a time span T1, a PRACH resource quantity corresponding to a first PRACH resource configuration in the at least two PRACH resource configurations is Num1, and a PRACH resource quantity corresponding to a second PRACH resource configuration is Num2; a ratio of Num1 to Num2 is fixed r1, or a difference between Num1 and Num2 is fixed, and Num1 and Num2 may be the same (that is, the difference is 0 or the ratio is 1) or different.

Optionally, in another embodiment, the at least two PRACH resource configurations include the first PRACH resource configuration and the second PRACH resource configuration. If a channel characteristic value in the channel characteristic range corresponding to the first PRACH resource configuration is less than a channel characteristic value in the channel characteristic range corresponding to the second PRACH resource configuration, within a predefined time span and/or frequency bandwidth, a PRACH resource quantity corresponding to the first PRACH resource configuration is greater than or equal to a PRACH resource quantity corresponding to the second PRACH resource configuration. For example, within a predefined time span and/or frequency bandwidth, path loss values in a path loss range ((x0dB, x1dB]) corresponding to a PRACH resource configuration of the preamble format 5 are all less than path loss values in a path loss range ((x1dB, x2dB]) corresponding to a PRACH resource configuration of the preamble format 6, and a PRACH resource quantity corresponding to the PRACH resource configuration of the preamble format 5 is greater than or equal to a PRACH resource quantity corresponding to the PRACH resource configuration of the preamble format 6.

It should be understood that the embodiment of the present invention is not limited thereto. Within a predefined time span and/or frequency bandwidth, a PRACH resource quantity corresponding to a PRACH resource configuration with a small channel characteristic value may also be less than a PRACH resource quantity corresponding to a PRACH resource configuration with a great channel characteristic value.

Optionally, in anther embodiment, the UE may store random access configuration information (pre-agree with the base station on the random access configuration information), or the UE may receive random access configuration information sent by a network-side device (for example, a base station or a controller). The random access configuration information reflects a correspondence between each PRACH configuration index in at least one PRACH configuration index and at least two PRACH resource configurations indicated by each PRACH configuration index. Further, each of the at least two PRACH resource configurations indicated by each PRACH configuration index is corresponding to a channel characteristic range. Certainly, the base station and the UE may pre-agree on correspondences between the at least two PRACH resource configurations indicated by each PRACH configuration index and the channel characteristic ranges.

Optionally, the random access configuration information may further reflect the correspondences between the at least two PRACH resource configurations indicated by each PRACH configuration index and the channel characteristic ranges.

In step 102, the UE may determine, according to the first PRACH configuration index by using the correspondence reflected in the random access configuration information, the at least two PRACH resource configurations indicated by the first PRACH configuration index; and determine, according to the channel characteristic value of the UE, a PRACH resource configuration corresponding to a channel characteristic range that the channel characteristic value of the UE falls within, and use the PRACH resource configuration as the first PRACH resource configuration.

Optionally, the UE stores the correspondences between the at least two PRACH resource configurations indicated by each PRACH configuration index and the channel characteristic ranges. The UE may also acquire, from the network-side device, the correspondences between the at least two PRACH resource configurations indicated by each PRACH configuration index and the channel characteristic ranges. It should be understood that the embodiment of the present invention is not limited thereto.

Further, the random access configuration information further reflects correspondences between at least two PRACH configuration indexes and PRACH resource configurations indicated by the at least two PRACH configuration indexes, where the at least two PRACH configuration indexes include the first PRACH configuration index, and further include the second PRACH configuration index. Within a predefined time span and/or frequency bandwidth, a fixed difference or ratio exists between PRACH resource quantities corresponding to PRACH resource configurations indicated by the first PRACH configuration index and the second PRACH configuration index. For example, within a predefined time span and/or frequency bandwidth, a PRACH resource quantity corresponding to a PRACH resource configuration of the preamble format 5 indicated by the first PRACH configuration index is Num3, and a PRACH resource quantity corresponding to a PRACH resource configuration of the preamble format 5 indicated by the second configuration index is Num4; a ratio of Num3 to Num4 is fixed r2, or a difference between Num3 and Num4 is fixed, and Num3 and Num4 may be the same (that is, the difference is 0 or the ratio is 1) or different. For another example, within a predefined time span and/or frequency bandwidth, a PRACH resource quantity corresponding to a PRACH resource configuration of the preamble format 5 indicated by the first PRACH configuration index is Num3, and a PRACH resource quantity corresponding to a PRACH resource configuration of the preamble format 6 indicated by the second configuration index is Num5; a ratio of Num3 to Num5 is fixed r3, or a difference between Num3 and Num5 is fixed, and Num3 and Num5 may be the same (that is, the difference is 0 or the ratio is 1) or different.

Optionally, information of the PRACH resource corresponding to each PRACH resource configuration may include at least one of the following: a random access preamble format, a version, a PRACH resource period, a start position of the PRACH resource period, an offset between a position of the PRACH resource and the start position of the PRACH resource period, the position of the PRACH resource, a size of the PRACH resource, the format of the random access preamble sent on the PRACH resource, a PRACH resource density, a PRACH resource quantity, and a sequence number of a PRACH frequency-domain resource.

Optionally, the random access configuration information may further include a correspondence between each PRACH resource configuration and information of the PRACH resource corresponding to each PRACH resource configuration. For example, a random access configuration table may further reflect a correspondence between each PRACH configuration index in at least one PRACH configuration index and a version. For another example, the random access configuration table further reflects a correspondence between each PRACH configuration index in at least one PRACH configuration index and a position of a PRACH time-domain resource. It should be understood that the foregoing examples are only exemplary, but not intended to limit the scope of the present invention.

Further, a fixed offset exists between a position of the PRACH resource corresponding to the first PRACH resource configuration and the start position of the PRACH resource period, where the offset may include one or more of the following: a symbol quantity, a subframe quantity, a timeslot quantity, a frame quantity, and the like. Within a predefined time span and/or frequency bandwidth, a fixed difference or ratio may also exist between offsets of PRACH resources respectively corresponding to different resource configurations corresponding to the first PRACH resource configuration. For example, an offset of a PRACH resource corresponding to a PRACH resource configuration of the preamble format 5 indicated by the first PRACH configuration index is K1 subframes, and an offset of a PRACH resource corresponding to a PRACH resource configuration of the preamble format 6 indicated by the first PRACH configuration index is K2 subframes; a ratio of K1 to K2 is fixed r4, or a difference between K1 and K2 is fixed, and K1 and K2 may be the same (that is, the difference is 0 or the ratio is 1) or different. In addition, densities of PRACH resources corresponding to different PRACH resource configurations corresponding to the first PRACH resource configuration may be the same or different.

Optionally, the random access configuration information may be expressed in a table form.

The UE may determine, by using the random access configuration information, at least two PRACH resource configurations corresponding to the first PRACH configuration index, and information of PRACH resources corresponding to the PRACH resource configurations.

Optionally, a number of a system frame and a number of a subframe in which a start position of a PRACH time-domain resource period of a period Mi*Sms is located may be determined in a predefined manner. For example, the start position of the PRACH time-domain resource period is determined when the following formula (1) is satisfied:

$$(10*\text{system frame number} + \text{subframe number})\text{mod}(Mi*Sms)=x \qquad (1)$$

where, mod is a modulo operator, and x is a constant.

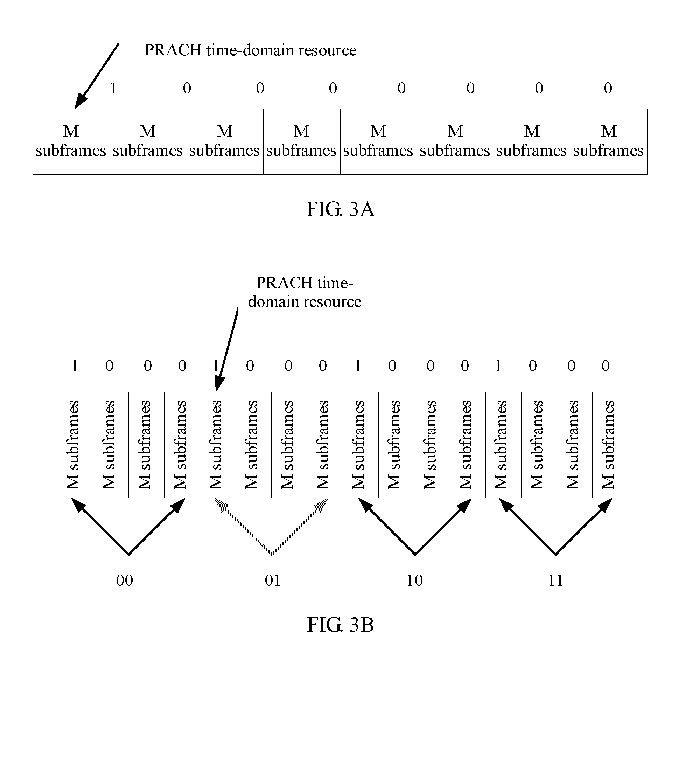

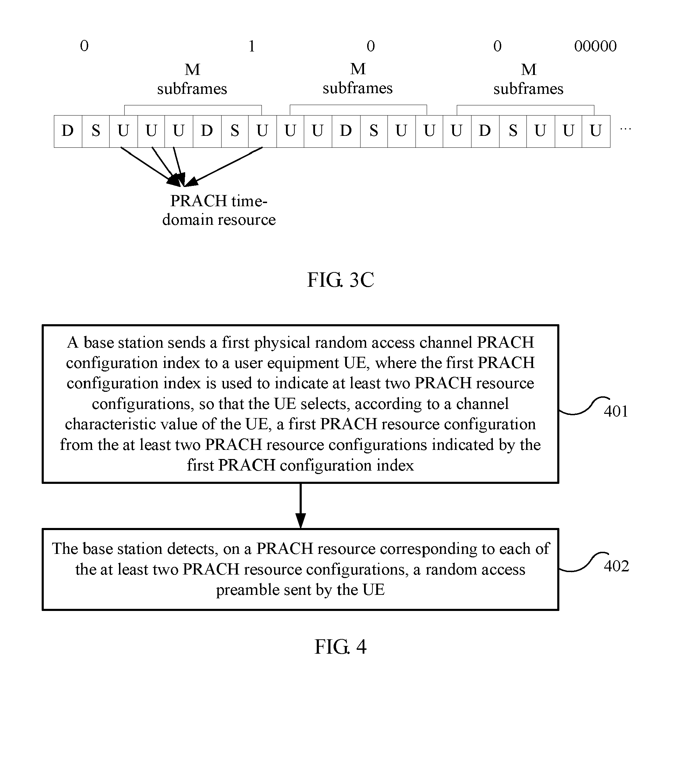

Optionally, before step 103, the UE may determine positions of PRACH time-domain resources corresponding to PRACH time-domain resource configurations by using bit indications in the random access configuration information. For example, in an FDD system, assuming that a PRACH time-domain resource occupies M subframes, the PRACH time-domain resource uses M*8ms as a period, and a group of bits (such as 10000000) is used in the M*8ms PRACH time-domain resource period to indicate a position of the PRACH time-domain resource, as shown in FIG. 3A, where 1 indicates that corresponding M subframes are the position of the PRACH time-domain resource. For another example, in an FDD system, assuming that a PRACH time-domain resource occupies M subframes, the PRACH time-domain resource uses M*16ms as a period, and two groups of bits (such as 1000 and 01) are used in the M*16ms PRACH time-domain resource period to indicate a position of the PRACH time-domain resource, as shown in FIG. 3B, where 1 in bits 1000 corresponding to bits 01 indicates that corresponding M subframes are the position of the PRACH time-domain resource. Similarly, in a TDD system, bit indications in the random access configuration information may also be used to determine a position of a PRACH time-domain resource, and a PRACH resource carrying a preamble of a newly defined preamble format is mapped to discontinuous subframes. As shown in FIG. 3C, D indicates a downlink subframe, U indicates an uplink subframe, S indicates a TDD special subframe, and 1 indicates that uplink subframes (U) in corresponding M subframes are the position of the PRACH time-domain resource, and the like.

Optionally, a position of a PRACH frequency-domain resource may be determined according to a PRACH frequency offset (Prach-Frequency Offset) configured by using RRC common signaling, and a predefined offset, where the predefined offset is related to the channel characteristic range that the channel characteristic value of the UE falls within. For example, the predefined offset may be expressed with a function of an index number corresponding to the channel characteristic range, and further, may be expressed with a function of the index number corresponding to the channel characteristic range and a sequence number of a frequency resource.

Specifically, for a case of Table 1, in the FDD system, a sequence number $n_{PRB}^{RA}$ of a first resource block (Resource Block, RB) that may be occupied by the PRACH frequency-domain resource may be expressed with the following formula (2-1):

$$n_{PRB}^{RA} = n_{PRB\,offset}^{RA} + I(\text{s})*6 \qquad (2\text{-}1)$$

where, $n_{PRBoffset}^{RA}$ indicates a PRACH frequency offset configured for the preamble formats 0-4 by using RRC common signaling, and I(s) is a function of an index number s corresponding to the channel characteristic range that the channel characteristic value of the UE falls within, for example, I(s)=s.

Alternatively, $n_{PRB}^{RA}$ may also be expressed with the following formula (2-2):

$$n_{PRB}^{RA} = n_{PRB\,offset}^{RA'} + I'(\text{s})*6 \qquad (2\text{-}2)$$

where, $n_{PRBoffset}^{RA}$ indicates a PRACH frequency offset configured for the newly defined preamble formats (such as the preamble formats 5-8) by using RRC common signaling, and I'(s) is a function of an index number s corresponding to the channel characteristic range that the channel characteristic value of the UE falls within, for example, I'(s)=s-1.

Alternatively, $n_{PRB}^{RA}$ may also be expressed with the following formula (3-1):

$$n_{PRB}^{RA} = n_{PRB \, offset}^{RA} + 6 + f_{RA}^{'} * 6 + \sum_{j=0}^{s-1} 6 * Num_{j}^{'} \qquad (3-1)$$

where, $f_{RA}^{'}$ indicates a sequence number of a frequency resource configured for the newly defined preamble formats (such as the preamble formats 5-8), and $Num_{j}^{'}$ indicates a quantity of sequence numbers of frequency resources of a preamble format corresponding to a channel characteristic range index number j.

Alternatively, $n_{PRB}^{RA}$ may also be expressed with the following formula (3-2):

$$n_{PRB}^{RA} = n_{PRB \, offset}^{RA'} + f_{RA}^{'} * 6 + \sum_{j=0}^{s-1} 6 * Num_{j}^{'} \qquad (3-2)$$

Specifically, in the TDD system, the sequence number $n_{PRB}^{RA}$ of the first RB that may be occupied by the PRACH frequency-domain resource may be expressed with the following formula (4):

$$n_{PRB}^{RA} \begin{cases} = n_{PRB \, offset}^{RA} + 6*\max(\left\lfloor \dfrac{even f_{RA}}{2} \right\rfloor) + 6*s, \quad \text{if } f_{RA} \bmod 2 = 0 \\[4mm] = N_{RB}^{UL} - 6 - n_{PRB \, offset}^{RA} - 6*\max(\left\lfloor \dfrac{odd f_{RA}}{2} \right\rfloor) - 6*s, \quad \text{otherwise} \end{cases} \qquad (4)$$

where, $f_{RA}$ indicates a sequence number of a frequency resource configured for the preamble formats 0-4. even $f_{RA}$ indicates that $f_{RA}$ is an even number, namely, satisfying $f_{RA}$ mod2=0; correspondingly, odd $f_{RA}$ indicates that $f_{RA}$ is an odd number. max is an operation of obtaining a maximum value, $N_{RB}^{UL}$ indicates a quantity of available uplink RBs, and s indicates an index number corresponding to a channel characteristic range that a channel characteristic value falls within.

Similarly, $n_{PRB}^{RA}$ may also be expressed with the foregoing formula (2-2):

Alternatively, $n_{PRB}^{RA}$ may also be expressed with the following formula (5-1):

$$n_{PRB}^{RA} \begin{cases} = n_{PRB \, offset}^{RA} + 6*\max(\left\lfloor \dfrac{even f_{RA}}{2} \right\rfloor) + 6 + 6*f_{RA}^{'} + \sum_{j=0}^{s-1} 6 * Num_{j}^{'}, \quad \text{if } f_{RA} \bmod 2 = 0 \\[4mm] = N_{RB}^{UL} - 6 - n_{PRB \, offset}^{RA} - 6*\max(\left\lfloor \dfrac{odd f_{RA}}{2} \right\rfloor) - (6 + 6*f_{RA}^{'} + \sum_{j=0}^{s-1} 6 * Num_{j}^{'}), \quad \text{otherwise} \end{cases} \qquad (5-1)$$

Alternatively, $n_{PRB}^{RA}$ may also be expressed with the following formula (5-2):

$$n_{PRB}^{RA} \begin{cases} = n_{PRB \, offset}^{RA'} + 6*f_{RA}^{'} + \sum_{j=0}^{s-1} 6 * Num_{j}^{'}, \quad \text{if } f_{RA}^{'} \bmod 2 = 0 \\[4mm] = N_{RB}^{UL} - 6 - n_{PRB \, offset}^{RA'} - 6*f_{RA}^{'} - \sum_{j=0}^{s-1} 6 * Num_{j}^{'}, \quad \text{otherwise} \end{cases} \qquad (5-2)$$

It should be noted that in a case in which a sequence number $f'_{RA}$ of a frequency resource is configured for the newly defined preamble formats (such as the preamble formats 5-8), a maximum quantity of PRACH frequency-domain resources of a newly defined preamble format in a subframe is a maximum value of the sequence number of the frequency resource of the preamble format corresponding to the PRACH resource configuration plus 1, namely, $\max(f'_{RA})+1$.

It should be understood that the foregoing instances are only exemplary. The embodiment of the present invention neither limits a method for determining a position of a PRACH frequency-domain resource, nor limits an application scenario of the determining method, where the determining method may also be applied to a case in which a frequency-domain bandwidth occupied by a PRACH frequency-domain resource is less than 6 RBs. In addition, the predefined offset may also be expressed with a function of other parameters related to the channel characteristic range than the index number.

Optionally, in step 102, the UE may obtain a path loss value of the UE by using the following method: The UE obtains an RSRP value through measurement, and obtains, by using a system information block type 2 (System Information Block Type2, SIB2), power of a downlink cell-specific reference signal (Cell-specific Reference Signals, CRS) sent by the eNodeB. The UE obtains the path loss value of the UE by calculating a difference between the power of the CRS and the RSRP value.

The following further describes an embodiment of the present invention in more detail with reference to specific examples.

FIG. 4 is a flowchart of a method for configuring a physical random access channel resource according to another embodiment of the present invention. The method in FIG. 4 is executed by a base station. The method corresponds to the method in FIG. 1, and therefore, descriptions already provided in the embodiment in FIG. 1 are omitted properly.

401. A base station sends a first physical random access channel PRACH configuration index to a user equipment UE, where the first PRACH configuration index is used to indicate at least two PRACH resource configurations, so that the UE selects, according to a channel characteristic value of the UE, a first PRACH resource configuration from the at least two PRACH resource configurations indicated by the first PRACH configuration index.

402. The base station detects, on a PRACH resource corresponding to each of the at least two PRACH resource configurations, a random access preamble sent by the UE.

Based on the foregoing technical solution, in the embodiment of the present invention, a base station sends a PRACH configuration index to all UEs in a cell, where the PRACH configuration index is used to indicate at least two PRACH resource configurations; and a UE selects, according to a channel characteristic value of the UE, a first PRACH resource configuration from the at least two PRACH resource configurations indicated by the first PRACH configuration index, and sends a random access preamble on a PRACH resource corresponding to the selected first PRACH resource configuration to the base station. The base station detects, on a PRACH resource corresponding to each of the at least two PRACH resource configurations, random access preambles sent by UEs having different channel characteristic values. Thereby, PRACH resource configuration efficiency is improved, and accuracy of receiving random access preambles by the base station is improved.

Optionally, in an embodiment, a channel characteristic may include one or more of the following: RSRP, RSRQ, path loss, CQI, and the like. It should be understood that the embodiment of the present invention is not limited thereto.

For a method for dividing channel characteristic values, reference may be made to the foregoing embodiment, and no further description is provided herein.

Optionally, in another embodiment, in step 401, the base station may send, by using RRC common signaling, the first PRACH configuration index to the UE. PRACH resource configurations indicated by the first PRACH configuration index may be PRACH time-domain resource configurations or PRACH frequency-domain resource configurations.

Optionally, in another embodiment, within a predefined time span and/or frequency bandwidth, a fixed difference or ratio may exist between PRACH resource quantities corresponding to at least two PRACH resource configurations. For a specific example, reference may be made to the foregoing embodiment, and no further description is provided herein.

Optionally, in another embodiment, the at least two PRACH resource configurations include the first PRACH resource configuration and a second PRACH resource configuration. If a channel characteristic value in the channel characteristic range corresponding to the first PRACH resource configuration is less than a channel characteristic value in the channel characteristic range corresponding to the second PRACH resource configuration, within a predefined time span and/or frequency bandwidth, a PRACH resource quantity corresponding to the first PRACH resource configuration is greater than or equal to a PRACH resource quantity corresponding to the second PRACH resource configuration. For a specific example, reference may be made to the foregoing embodiment, and no further description is provided herein.

Optionally, in another embodiment, before step 402, the base station may store preset random access configuration information, and determine at least two PRACH resource configurations according to the first PRACH configuration index by using a correspondence included in the random access configuration information. The random access configuration information reflects a correspondence between each PRACH configuration index in at least one PRACH configuration index and at least two PRACH resource configurations indicated by each PRACH configuration index. Optionally, the base station may send the random access configuration information to the UE, or the base station and the UE may pre-agree on the random access configuration information.

Further, each of the at least two PRACH resource configurations indicated by each PRACH configuration index corresponds to a channel characteristic range. The base station may send correspondences between the at least two PRACH resource configurations indicated by each PRACH configuration index and the channel characteristic ranges to the UE. Certainly, the base station and the UE may pre-agree on the correspondences between the at least two PRACH resource configurations indicated by each PRACH configuration index and the channel characteristic ranges. It should be understood that the embodiment of the present invention is not limited thereto.

Optionally, the random access configuration information may further reflect the correspondences between the at least two PRACH resource configurations indicated by each PRACH configuration index and the channel characteristic ranges.

Further, the random access configuration information further reflects correspondences between at least two PRACH configuration indexes and PRACH resource configurations indicated by the at least two PRACH configuration indexes, where the at least two PRACH configuration indexes include the first PRACH configuration index, and further include the second PRACH configuration index. Within a predefined time span and/or frequency bandwidth, a fixed difference or ratio exists between PRACH resource quantities respectively corresponding to PRACH resource configurations indicated by the first PRACH configuration index and the second PRACH configuration index. For a specific example, reference may be made to the foregoing embodiment, and no further description is provided herein.

Optionally, information of the PRACH resource corresponding to each PRACH resource configuration may include at least one of the following: a random access preamble format, a version, a PRACH resource period, a start position of the PRACH resource period, an offset between a position of the PRACH resource and the start position of the PRACH resource period, the position of the PRACH resource, a size of the PRACH resource, the format of the random access preamble sent on the PRACH resource, a PRACH resource density, a PRACH resource quantity, and a sequence number of a PRACH frequency-domain resource.

Optionally, the random access configuration information may further include a correspondence between each PRACH resource configuration and information of the PRACH resource corresponding to each PRACH resource configuration. For example, a random access configuration table may further reflect a correspondence between each PRACH configuration index in at least one PRACH configuration index and a version. For another example, the random access configuration table further reflects a correspondence between each PRACH configuration index in at least one PRACH configuration index and a position of a PRACH time-domain resource. It should be understood that the foregoing examples are only exemplary, but not intended to limit the scope of the present invention.

Optionally, the random access configuration information may be expressed in a table form.

Correspondingly, the base station may determine, by using the random access configuration information, at least two PRACH resource configurations corresponding to the first PRACH configuration index, and information of PRACH resources corresponding to the PRACH resource configurations. For specific examples in which the base station determines the position of the PRACH time-domain resource, the position of the PRACH frequency-domain resource, the start position of the PRACH time-domain resource period, and the like, reference may be made to the foregoing embodiment, and no further description is provided herein.

The following describes the embodiment of the present invention in more detail with reference to specific examples.

In a possible implementation manner, the random access configuration information of the base station and the UE may be expressed in a table form as follows:

**Table 3 Random access configuration information**

| PRACH configuration index | [Preamble format, resource density (M1*8ms)] | [Preamble format, resource density (M2*8ms)] | [Preamble format, resource density (M3*8ms)] | [Preamble format, resource density (M4*8ms)] | Version $r_{RA}$ | Position of PRACH time-domain resource |
|---|---|---|---|---|---|---|
| 0 | [5,1/8] | [6,1/8] | [7,1/8] | [8,1/8] | 0 | 10000000 |
| 1 | [5,1/8] | [6,1/8] | [7,1/8] | [8,1/8] | 1 | 01000000 |
| 2 | [5,1/8] | [6,1/8] | [7,1/8] | [8,1/8] | 2 | 00100000 |

(continued)

| PRACH configuration index | [Preamble format, resource density (M1*8ms)] | [Preamble format, resource density (M2*8ms)] | [Preamble format, resource density (M3*8ms)] | [Preamble format, resource density (M4*8ms)] | Version $r_{RA}$ | Position of PRACH time-domain resource |
|---|---|---|---|---|---|---|
| 3 | [5,1/8] | [6,1/8] | [7,1/8] | [8,1/8] | 3 | 00010000 |
| 4 | [5,1/8] | [6,1/8] | [7,1/8] | [8,1/8] | 4 | 00001000 |
| 5 | [5,1/8] | [6,1/8] | [7,1/8] | [8,1/8] | 5 | 00000100 |
| 6 | [5,1/8] | [6,1/8] | [7,1/8] | [8,1/8] | 6 | 00000010 |
| 7 | [5,1/8] | [6,1/8] | [7,1/8] | [8,1/8] | 7 | 00000001 |
| 8 | [5,1/4] | [6,1/4] | [7,1/4] | [8,1/4] | 0 | 10001000 |
| 9 | [5,1/4] | [6,1/4] | [7,1/4] | [8,1/4] | 1 | 01000100 |
| 10 | [5,1/4] | [6,1/4] | [7,1/4] | [8,1/4] | 2 | 00100010 |
| 11 | [5,1/4] | [6,1/4] | [7,1/4] | [8,1/4] | 3 | 00010001 |
| 12 | [5,1/2] | [6,1/2] | [7,1/2] | [8,1/2] | 0 | 11001100 |
| 13 | [5,1/2] | [6,1/2] | [7,1/2] | [8,1/2] | 1 | 00110011 |
| 14 | [5,1] | [6,1] | [7,1] | [8,1] | 0 | 11111111 |

As shown in Table 3, a PRACH configuration index indicates a group of PRACH time-domain resource configurations, where the group of PRACH time-domain resource configurations includes four PRACH time-domain resource configurations. In a group of PRACH time-domain resource configurations, each PRACH time-domain resource configuration corresponds to a path loss range, and path loss ranges corresponding to different PRACH time-domain resource configurations are different. Path loss ranges respectively corresponding to PRACH time-domain resource configurations of preamble formats 5-8 are shown in Table 1 and Table 2.

In Table 3, PRACH time-domain resources corresponding to different PRACH time-domain resource configurations indicated by a PRACH configuration index have a same density in a PRACH time-domain resource period, for example, densities of PRACH time-domain resources corresponding to PRACH time-domain resource configurations of the preamble formats 5-8 indicated by a PRACH configuration index 0 are all 1/8. Different PRACH time-domain resource configurations indicated by a PRACH configuration index have a same version, for example, versions of PRACH time-domain resource configurations of the preamble formats 5-8 indicated by the PRACH configuration index 0 are all 0. A specific position of a PRACH time-domain resource is determined by bit indications (such as bit indications 10000000 of the PRACH configuration index 0). Quantities of subframes occupied by a PRACH time-domain resource of the preamble formats 5-8 are M1, M2, M3, and M4 respectively, and PRACH time-domain resource periods are M1*8ms, M2*8ms, M3*8ms, and M4*8ms respectively.

Optionally, within a predefined time span, a fixed difference or ratio may exist between PRACH time-domain resource quantities corresponding to different PRACH time-domain resource configurations indicated by a PRACH configuration index. As shown in Table 3, within a predefined time span T, a ratio of PRACH time-domain resource quantities respectively corresponding to PRACH time-domain resource configurations of the preamble formats 5-8 is 1/M1:1/M2:1/M3:1/M4. Assuming that a predefined time span is 6720ms, and that values of M1, M2, M3, and M4 are 4, 5, 6, and 7 respectively, PRACH time-domain resource quantities respectively corresponding to PRACH time-domain resource configurations of the preamble formats 5-8 indicated by the PRACH configuration index 0 are 210, 168, 140, and 120, and a ratio is 105:84:70:60, namely, 1/4:1/5:1/6:1/7; similarly, PRACH time-domain resource quantities respectively corresponding to PRACH time-domain resource configurations of the preamble formats 5-8 indicated by a PRACH configuration index 8 are 420, 336, 280, and 240, and a ratio is 105:84:70:60, namely, 1/4:1/5:1/6:1/7.

Optionally, within a predefined time span, a fixed difference or ratio exists between PRACH time-domain resource quantities respectively corresponding to PRACH time-domain resource configurations indicated by different PRACH configuration indexes. As shown in Table 3, within a predefined time span T, a PRACH time-domain resource quantity corresponding to a PRACH time-domain resource configuration of the preamble format 5 indicated by the PRACH configuration index 0 is T/M1*8ms, and a PRACH time-domain resource quantity corresponding to a PRACH time-domain resource configuration of the preamble format 5 indicated by the PRACH configuration index 8 is 2*T/M1*8ms, that is, a ratio of PRACH time-domain resource quantities corresponding to PRACH time-domain resource configurations of the preamble format 5 indicated respectively by the PRACH configuration index 0 and PRACH configuration index 8 is 1:2.

Optionally, if a channel characteristic value in the channel characteristic range corresponding to the first PRACH resource configuration is less than a channel characteristic value in the channel characteristic range corresponding to the second PRACH resource configuration, within a predefined time span, a PRACH time-domain resource quantity corresponding to the first PRACH resource configuration is greater than or equal to a PRACH time-domain resource quantity corresponding to the second PRACH resource configuration. The first PRACH resource configuration and the second PRACH resource configuration are indicated by a same PRACH configuration index. As shown in Table 3, path loss values in a path loss range ((x0dB, x1dB]) corresponding to a PRACH time-domain resource configuration of the preamble format 5 indicated by the PRACH configuration index 0 are all less than path loss values in a path loss range ((x1dB, x2dB]) corresponding to a PRACH time-domain resource configuration of the preamble format 6. Within a predefined time span T, a PRACH time-domain resource quantity T/M1*8ms corresponding to the PRACH time-domain resource configuration of the preamble format 5 is greater than or equal to a PRACH time-domain resource quantity T/M2*8ms corresponding to the PRACH time-domain resource configuration of the preamble format 6, that is, M1 is less than or equal to M2. It should be understood that the embodiment of the present invention is not limited thereto. Within a predefined time span, a PRACH time-domain resource quantity corresponding to a PRACH resource configuration with a small channel characteristic value may also be less than a PRACH time-domain resource quantity corresponding to a PRACH resource configuration with a great channel characteristic value.

In Table 3, the random access configuration information may further include a correspondence between each PRACH resource configuration and information of the PRACH resource corresponding to each PRACH resource configuration. Information of a PRACH time-domain resource corresponding to each PRACH resource configuration may include at least one of the following: a PRACH time-domain resource period, a start position of the PRACH time-domain resource period, an offset between a position of the PRACH time-domain resource and the start position of the PRACH time-domain resource period, the position of the PRACH time-domain resource, a size of the PRACH time-domain resource, a format of a random access preamble sent on a PRACH resource, a PRACH resource density, a PRACH time-domain resource quantity, and the like.

Specifically, for determining the start position of the PRACH time-domain resource period, reference may be made to the foregoing formula (1), and no further description is provided herein.

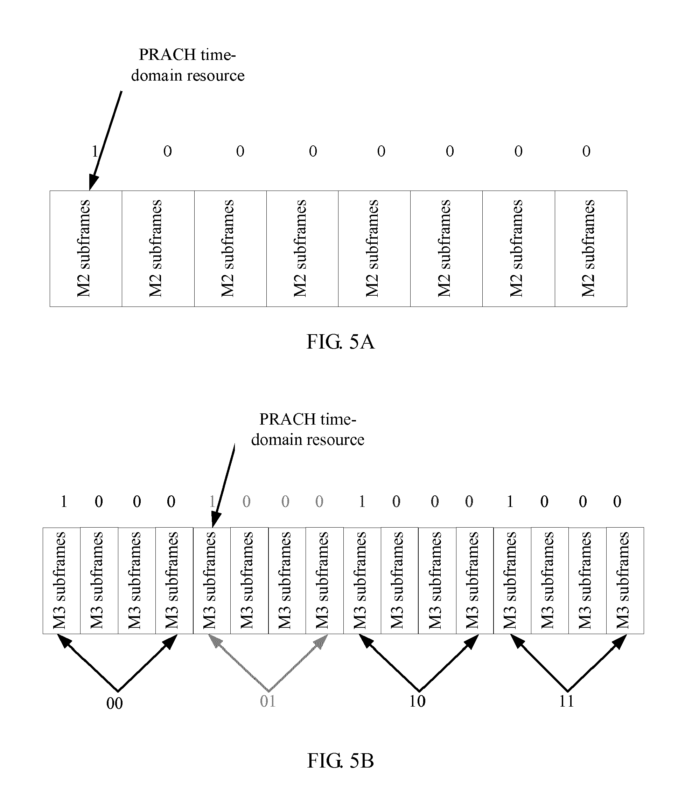

For determining the position of the PRACH time-domain resource, reference may be made to the foregoing embodiment in FIG. 1, and no further description is provided herein. The offset between the position of the PRACH time-domain resource and the start position of the PRACH time-domain resource period includes one or more of the following: a symbol quantity, a subframe quantity, a timeslot quantity, a frame quantity, and the like. As shown in Table 3, in an FDD system, bit indications of PRACH time-domain resources corresponding to PRACH time-domain resource configurations of the preamble format 6 indicated by the PRACH configuration index 0 are 10000000, which indicates positions of the PRACH time-domain resources in an M2*8ms PRACH time-domain resource period. As shown in FIG. 5A, 1 indicates that corresponding M2 subframes are the position of the PRACH time-domain resource. The size of the PRACH time-domain resource is M2 subframes, and the offset between the position of the PRACH time-domain resource and the start position of the PRACH time-domain resource period is 0 subframe.

Optionally, within a predefined time span, a fixed difference or ratio exists between offsets between positions of PRACH time-domain resources corresponding to different PRACH time-domain resource configurations indicated by a PRACH configuration index and the start position of the PRACH time-domain resource period. As shown in Table 3, within a predefined time span T, an offset of a PRACH time-domain resource corresponding to a PRACH time-domain resource configuration of the preamble format 5 indicated by a PRACH configuration index 2 is M1*2 subframes, and an offset of a PRACH time-domain resource corresponding to a PRACH time-domain resource configuration of the preamble format 6 indicated by the PRACH configuration index 2 is also M1*2 subframes. A difference between the two offsets is 0 or a ratio of the two offsets is 1. For a manner of determining the position of the PRACH frequency-domain resource, namely, a sequence number $n_{PRB}^{RA}$ of a first RB that may be occupied by the PRACH frequency-domain resource, reference may be made to the foregoing formulas (2-1), (2-2), and (4), which are not further described herein.

The base station sends the first PRACH configuration index (which may be any one PRACH configuration index in Table 3) to all UEs in a cell by using RRC common signaling. For example, the first PRACH configuration index sent by the base station is 0; the PRACH configuration index 0 indicates four PRACH resource configurations, namely, PRACH time-domain resource configurations of the preamble formats 5-8. For example, a UE in a cell determines PRACH time-domain resource configurations of the preamble formats 5-8 according to the PRACH configuration index 0 by using the correspondence included in Table 3. Assuming that a path loss range that a path loss value of the UE falls within is x1dB<path loss value≤x2dB, the UE sends, on a PRACH resource corresponding to a PRACH time-domain resource configuration of the preamble format 6 indicated by the PRACH configuration index 0, a random access preamble to the base station.

Correspondingly, on the base station side, the base station may determine PRACH time-domain resource configurations of the preamble formats 5-8 according to the PRACH configuration index 0 by using the correspondence included in Table 3, and detect, on all PRACH resources respectively corresponding to the PRACH time-domain resource configurations of the preamble formats 5-8, the random access preamble sent by the UE.

Therefore, the UE receives the PRACH configuration index sent by the base station, where one PRACH configuration index is used to indicate at least two PRACH resource configurations, each PRACH resource configuration in the at least two PRACH resource configurations corresponds to a channel characteristic range, and channel characteristic ranges corresponding to different PRACH resource configurations are different. The UE selects, according to the PRACH configuration index, a first PRACH resource configuration corresponding to a channel characteristic range that a channel characteristic value of the UE falls within, from the at least two PRACH resource configurations, and sends, on a PRACH resource corresponding to the first PRACH resource configuration, a random access preamble to the base station. Therefore, for UEs having different channel characteristic values, corresponding PRACH resources for sending random access preambles can be determined by using a same index, and thereby, PRACH resource configuration efficiency is improved, and accuracy of receiving random access preambles by the base station is improved.

It should be noted that each parameter value, a quantity of PRACH time-domain resource configurations indicated by a PRACH configuration index, an applied FDD system, a bit indication manner, and the like in Table 3 are only exemplary, but not intended to limit the scope of the present invention.

For example, the random access configuration information of the base station and the UE may be expressed in a table form as follows:

**Table 4 Random access configuration information**

| PRACH configuration index | [Preamble format, resource density (M1*4ms)] | [Preamble format, resource density (M2*8ms), position of time-domain resource] | [Preamble format, resource density (M3*16ms), position of time-domain resource] | [Preamble format, resource density (M4*32ms), position of time-domain resource] | Version $r_{RA}$ | Position of PRACH time-domain resource |
|---|---|---|---|---|---|---|
| 0 | [5,1/4] | [6,1/8,0] | [7,1/16,00] | [8,1/32,000] | 0 | 1000 |
| 1 | [5,1/4] | [6,1/8,0] | [7,1/16,00] | [8,1/32,001] | 1 | 1000 |
| 2 | [5,1/4] | [6,1/8,0] | [7,1/16,01] | [8,1/32,010] | 2 | 1000 |
| 3 | [5,1/4] | [6,1/8,0] | [7,1/16,01] | [8,1/32,011] | 3 | 1000 |
| 4 | [5,1/4] | [6,1/8,1] | [7,1/16,10] | [8,1/32,100] | 4 | 1000 |
| 5 | [5,1/4] | [6,1/8,1] | [7,1/16,10] | [8,1/32,101] | 5 | 1000 |
| 6 | [5,1/4] | [6,1/8,1] | [7,1/16,11] | [8,1/32,110] | 6 | 1000 |
| 7 | [5,1/4] | [6,1/8,1] | [7,1/16,11] | [8,1/32,111] | 7 | 1000 |
| 8 | Omitted | | | | | |

In Table 4, a PRACH time-domain resource configuration may use two groups of bit indications to determine a position of a corresponding PRACH time-domain resource, for example, bit indications (bits 01 and 1000) of PRACH time-domain resources corresponding to PRACH time-domain resource configurations of the preamble format 7 indicated by a PRACH configuration index 3 indicate positions of PRACH time-domain resources in an M3*16ms PRACH time-domain resource period. As shown in FIG. 5B, 1 in bits 1000 corresponding to bits 01 indicates that corresponding M3 subframes are the position of the PRACH time-domain resource.

Similarly, for a manner of determining other PRACH time-domain resource information by using Table 4, reference may be made to the foregoing embodiment, and no further description is provided herein.

For a manner of determining the position of the PRACH frequency-domain resource, namely, a sequence number $n_{PRB}^{RA}$ of a first RB that may be occupied by the PRACH frequency-domain resource, reference may be made to the foregoing formulas (2-1), (2-2), and (4), which are not further described herein.

In another possible implementation manner, the random access configuration information predefined by the base station and the UE may be expressed in a table form as follows:

**Table 5 Random access configuration information**

| PRACH configuration index | [Preamble format, $f_{RA}'$, resource density (M1*8ms)] | [Preamble format, $f_{RA}'$, resource density (M2*8ms)] | [Preamble format, $f_{RA}'$, resource density (M3*8ms)] | [Preamble format, $f_{RA}'$, resource density (M4*8ms)] | Version $r_{RA}$ | Position of PRACH time-domain resource |
|---|---|---|---|---|---|---|
| 0 | [5,0,1/8] | [6,0,1/8] | [7,0,1/8] | [8,0,1/8] | 0 | 10000000 |
| 1 | [5,0,1/8] | [6,0,1/8] | [7,0,1/8] | [8,0,1/8] | 1 | 01000000 |
| 2 | [5,0,1/8] | [6,0,1/8] | [7,0,1/8] | [8,0,1/8] | 2 | 00100000 |
| 3 | [5,0,1/8] | [6,0,1/8] | [7,0,1/8] | [8,0,1/8] | 3 | 00010000 |
| 4 | [5,0,1/8] | [6,0,1/8] | [7,0,1/8] | [8,0,1/8] | 4 | 00001000 |
| 5 | [5,0,1/8] | [6,0,1/8] | [7,0,1/8] | [8,0,1/8] | 5 | 00000100 |
| 6 | [5,0,1/8] | [6,0,1/8] | [7,0,1/8] | [8,0,1/8] | 6 | 00000010 |
| 7 | [5,0,1/8] | [6,0,1/8] | [7,0,1/8] | [8,0,1/8] | 7 | 00000001 |
| 8 | [5,0,1/4] | [6,0,1/4] | [7,0,1/4] | [8,0,1/4] | 0 | 10001000 |
| 9 | [5,0,1/4] | [6,0,1/4] | [7,0,1/4] | [8,0,1/4] | 1 | 01000100 |
| 10 | [5,0,1/4] | [6,0,1/4] | [7,0,1/4] | [8,0,1/4] | 2 | 00100010 |
| 11 | [5,0,1/4] | [6,0,1/4] | [7,0,1/4] | [8,0,1/4] | 3 | 00010001 |
| 12 | [5,0,1/2] | [6,0,1/2] | [7,0,1/2] | [8,0,1/2] | 0 | 11001100 |
| 13 | [5,0,1/2] | [6,0,1/2] | [7,0,1/2] | [8,0,1/2] | 1 | 00110011 |
| 14 | [5,0,1] | [6,0,1] | [7,0,1] | [8,0,1] | 0 | 11111111 |
| 15 | [5,0,2] [5,1,2] | [6,0,2] [6,1,2] | [7,0,2] [7,1,2] | [8,0,2] [8,1,2] | 0 | 11111111 |
| 16 | [5,0,3] [5,1,3] [5,2,3] | [6,0,3] [6,1,3] [6,2,3] | [7,0,3] [7,1,3] [7,2,3] | [8,0,3] [8,1,3] [8,2,3] | 0 | 11111111 |
| 17 | [5,0,4] [5,1,4] [5,2,4] [5,3,4] | [6,0,4] [6,1,4] [6,2,4] [6,3,4] | [7,0,4] [7,1,4] [7,2,4] [7,3,4] | [8,0,4] [8,1,4] [8,2,4] [8,3,4] | 0 | 11111111 |
| 18 | [5,0,4] [5,1,4] [5,2,4] [5,3,4] | [6,0,3] [6,1,3] [6,2,3] | [7,0,2] [7,1,2] | [8,0,1] | 0 | 11111111 |

Different from Table 3 and Table 4, in Table 5, a parameter $f_{RA}'$ is further configured, and $f_{RA}'$ indicates a sequence number of a frequency-domain resource. In the embodiments of Table 3 and Table 4, in a subframe, there is only one PRACH frequency-domain resource corresponding to a PRACH resource configuration of a newly defined preamble format, but in Table 5, multiple PRACH frequency-domain resources, up to $\max(f_{RA}')+1$, are allowed in a subframe, that is, multiple users are allowed to send a preamble in a subframe. For example, $\max(f_{RA}')$ of PRACH resource configurations of the preamble format 5 indicated by a PRACH configuration index 17 is 3, that is, there are four PRACH frequency-domain resources in a subframe.

By using the manner of Table 5, a PRACH configuration index not only indicates a PRACH time-domain resource configuration, but also indicates a PRACH frequency-domain resource configuration. For the PRACH configuration index indicating the PRACH time-domain resource configuration, reference may be made to the manner of Table 3 and Table 4, and no further description is provided herein.

Optionally, within a predefined frequency bandwidth, a fixed difference or ratio may exist between PRACH frequency-domain resource quantities corresponding to different PRACH frequency-domain resource configurations indicated by a PRACH configuration index. As shown in Table 5, within an uplink bandwidth of a system, PRACH frequency-domain resource quantities respectively corresponding to PRACH frequency-domain resource configurations of the preamble formats 5-8 indicated by the PRACH configuration index 17 are the same and are 4, that is, a ratio is 1:1:1:1. Similarly, PRACH frequency-domain resource quantities respectively corresponding to PRACH frequency-domain resource configurations of the preamble formats 5-8 indicated by a PRACH configuration index 18 are 4, 3, 2, and 1, that is, a ratio is 4:3:2:1.

Optionally, within a predefined frequency bandwidth, a fixed difference or ratio exists between PRACH frequency-domain resource quantities respectively corresponding to PRACH frequency-domain resource configurations indicated by different PRACH configuration indexes. As shown in Table 5, within an uplink bandwidth of a system, PRACH frequency-domain resource quantities respectively corresponding to PRACH frequency-domain resource configurations of the preamble formats 5-8 indicated by the PRACH configuration index 0 are the same and are 1, and PRACH frequency-domain resource quantities respectively corresponding to PRACH frequency-domain resource configurations of the preamble formats 5-8 indicated by a PRACH configuration index 1 are the same and are 1, that is, a ratio of a PRACH frequency-domain resource quantity corresponding to any one PRACH frequency-domain resource configuration indicated by the PRACH configuration index 0 to a PRACH frequency-domain resource quantity corresponding to any one PRACH frequency-domain resource configuration indicated by the PRACH configuration index 1 is 1.

Similarly, within an uplink bandwidth of a system, PRACH frequency-domain resource quantities respectively corresponding to PRACH frequency-domain resource configurations of the preamble formats 5-8 indicated by a PRACH configuration index 16 are the same and are 3, and PRACH frequency-domain resource quantities respectively corresponding to PRACH frequency-domain resource configurations of the preamble formats 5-8 indicated by the PRACH configuration index 17 are the same and are 4, that is, a ratio of a PRACH frequency-domain resource quantity corresponding to any one PRACH frequency-domain resource configuration indicated by the PRACH configuration index 16 to a PRACH frequency-domain resource quantity corresponding to any one PRACH frequency-domain resource configuration indicated by the PRACH configuration index 17 is 3:4.

Optionally, if a channel characteristic value in the channel characteristic range corresponding to the first PRACH resource configuration is less than a channel characteristic value in the channel characteristic range corresponding to the second PRACH frequency-domain resource configuration, within a predefined frequency bandwidth, a PRACH frequency-domain resource quantity corresponding to the first PRACH resource configuration is greater than or equal to a PRACH frequency-domain resource quantity corresponding to the second PRACH resource configuration. The first PRACH resource configuration and the second PRACH resource configuration are indicated by a same PRACH configuration index. As shown in Table 5, path loss values in a path loss range ((x0dB, x1dB)) corresponding to a PRACH frequency-domain resource configuration of the preamble format 5 indicated by the PRACH configuration index 18 are all less than path loss values in a path loss range ((x1dB, x2dB)) corresponding to a PRACH frequency-domain resource configuration of the preamble format 6. Within an uplink bandwidth of a system, a PRACH frequency-domain resource quantity 4 corresponding to the PRACH frequency-domain resource configuration of the preamble format 5 is greater than a PRACH frequency-domain resource quantity 3 corresponding to the PRACH frequency-domain resource configuration of the preamble format 6. It should be understood that the embodiment of the present invention is not limited thereto. Within a predefined time span and/or frequency bandwidth, a PRACH frequency-domain resource quantity corresponding to a PRACH resource configuration with a small channel characteristic value may also be less than a PRACH frequency-domain resource quantity corresponding to a PRACH resource configuration with a great channel characteristic value.

For a manner of determining the position of the PRACH frequency-domain resource, namely, a sequence number $n_{PRB}^{RA}$ of a first RB that may be occupied by the PRACH frequency-domain resource, reference may be made to the foregoing formulas (3-1), (3-2), (5-1), and (5-2), which are not further described herein.

The base station sends the first PRACH configuration index (which may be any one PRACH configuration index in Table 5) to all UEs in a cell by using RRC common signaling. For example, the first PRACH configuration index sent by the base station is 16; the PRACH configuration index 16 indicates four PRACH resource configurations, namely, PRACH time-domain and frequency-domain resource configurations of the preamble formats 5-8. For example, a UE in a cell determines PRACH time-domain and frequency-domain resource configurations of the preamble formats 5-8 according to the PRACH configuration index 16 by using the correspondence included in Table 5. Assuming that a path loss range that a path loss value of the UE falls within is x1dB<path loss value≤x2dB, the UE sends, on PRACH resources corresponding to PRACH time-domain and frequency-domain resource configurations of the preamble format 6 indicated by the PRACH configuration index 16, a random access preamble to the base station.

Correspondingly, on the base station side, the base station may determine PRACH time-domain and frequency-domain resource configurations of the preamble formats 5-8 according to the PRACH configuration index 16 by using the correspondence included in Table 5, and detect, on all PRACH resources respectively corresponding to the PRACH time-domain and frequency-domain resource configurations of the preamble formats 5-8, the random access preamble sent by the UE.

Therefore, the UE receives the PRACH configuration index sent by the base station, where one PRACH configuration index is used to indicate at least two PRACH resource configurations, each PRACH resource configuration in the at least two PRACH resource configurations corresponds to a channel characteristic range, and channel characteristic ranges corresponding to different PRACH resource configurations are different. The UE selects, according to the PRACH configuration index, a first PRACH resource configuration corresponding to a channel characteristic range that a channel characteristic value of the UE falls within, from the at least two PRACH resource configurations, and sends, on a PRACH resource corresponding to the first PRACH resource configuration, a random access preamble to the base station. Therefore, for UEs having different channel characteristic values, corresponding PRACH resources for sending random access preambles can be determined by using a same index, and thereby, PRACH resource configuration efficiency is improved, and accuracy of receiving random access preambles by the base station is improved.

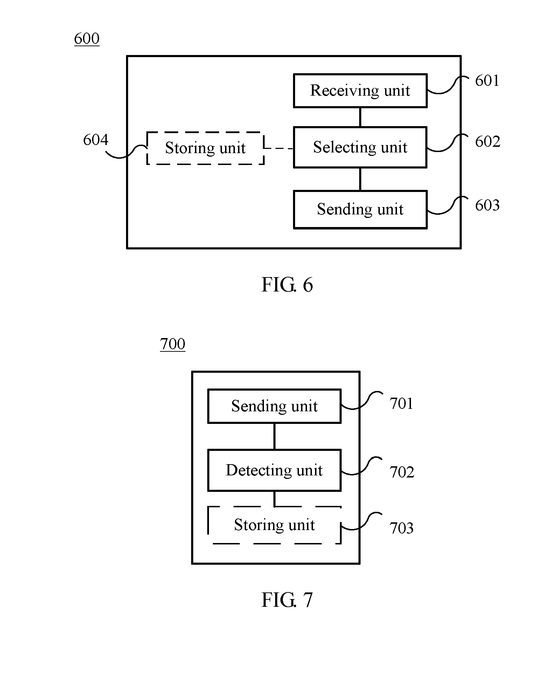

FIG. 6 is a structural block diagram of a user equipment according to an embodiment of the present invention. A user equipment 600 includes a receiving unit 601, a selecting unit 602, and a sending unit 603.

The receiving unit 601 is configured to receive a first PRACH configuration index sent by a base station, where the first PRACH configuration index is used to indicate at least two PRACH resource configurations.

The selecting unit 602 is configured to select, according to a channel characteristic value of the UE, a first PRACH resource configuration from the at least two PRACH resource configurations indicated by the first PRACH configuration index received by the receiving unit 601.

The sending unit 603 is configured to send a random access preamble on a PRACH resource corresponding to the first PRACH resource configuration selected by the selecting unit 602 to the base station.

Based on the foregoing technical solutions, in the embodiments of the present invention, a UE receives a PRACH configuration index sent by a base station, where the PRACH configuration index is used to indicate at least two PRACH resource configurations; and the UE selects, according to a channel characteristic value of the UE, a first PRACH resource configuration from the at least two PRACH resource configurations indicated by the first PRACH configuration index, and sends a random access preamble on a PRACH resource corresponding to the selected first PRACH resource configuration to the base station. Therefore, for UEs having different channel characteristic values, PRACH resources corresponding to the channel characteristic values of the UEs and used to send random access preambles can be determined by using a same index, and thereby, PRACH resource configuration efficiency is improved, and accuracy of receiving random access preambles by the base station is improved.

The user equipment 600 may implement each step relating to the user equipment in the methods in FIG. 1 to FIG. 5. For avoiding repetition, no further description is provided.

Optionally, in an embodiment, a channel characteristic may include one or more of the following: RSRP, RSRQ, path loss, CQI, and the like. It should be understood that the embodiment of the present invention is not limited thereto.

For a method for dividing channel characteristic values, reference may be made to the foregoing embodiment, and no further description is provided herein.

Optionally, the selecting unit 602 may be further configured to acquire the channel characteristic value of the UE. Specifically, a path loss value of the UE may be obtained by using the following method: obtaining an RSRP value through measurement, obtaining, by using a SIB2, power of a downlink CRS sent by the eNodeB, and obtaining the path loss value of the UE by calculating a difference between the power of the CRS and the RSRP value.

Optionally, in another embodiment, the user equipment 600 may further include a storing unit 604. The storing unit 604 is configured to store preset random access configuration information, or the receiving unit 601 may be further configured to receive random access configuration information sent by a network-side device. The random access configuration information reflects a correspondence between each PRACH configuration index in at least one PRACH configuration index and at least two PRACH resource configurations indicated by each PRACH configuration index.

Further, each of the at least two PRACH resource configurations indicated by each PRACH configuration index corresponds to a channel characteristic range. Optionally, the random access configuration information may further reflect correspondences between the at least two PRACH resource configurations indicated by each PRACH configuration index and the channel characteristic ranges. The selecting unit 604 is specifically configured to: determine, according to the random access configuration information, the at least two PRACH resource configurations indicated by the first PRACH configuration index; and determine, according to the channel characteristic value of the UE, a PRACH resource configuration corresponding to a channel characteristic range that the channel characteristic value of the UE falls within, and use the PRACH resource configuration as the first PRACH resource configuration.

Further, the storing unit 604 stores the preset correspondences between the at least two PRACH resource configurations indicated by each PRACH configuration index and the channel characteristic ranges; or the receiving unit 601 may be further configured to acquire, from the network-side device, the correspondences between the at least two PRACH resource configurations indicated by each PRACH configuration index and the channel characteristic ranges.

Optionally, information of the PRACH resource corresponding to each PRACH resource configuration may include at least one of the following: a random access preamble format, a version, a PRACH resource period, a start position of the PRACH resource period, an offset between a position of the PRACH resource and the start position of the PRACH resource period, the position of the PRACH resource, a size of the PRACH resource, the format of the random access preamble sent on the PRACH resource, a PRACH resource density, a PRACH resource quantity, and a sequence number of a PRACH frequency-domain resource.

Optionally, the random access configuration information may further include a correspondence between each PRACH resource configuration and information of the PRACH resource corresponding to each PRACH resource configuration. For example, a random access configuration table may further reflect a correspondence between each PRACH configuration index in at least one PRACH configuration index and a version. For another example, the random access configuration table further reflects a correspondence between each PRACH configuration index in at least one PRACH configuration index and a position of a PRACH time-domain resource. It should be understood that the foregoing examples are only exemplary, but not intended to limit the scope of the present invention.

Optionally, the random access configuration information may be expressed in a table form.

FIG. 7 is a structural block diagram of a base station according to an embodiment of the present invention. A base station 700 includes a sending unit 701 and a detecting unit 702.

The sending unit 701 is configured to send a first PRACH configuration index to a UE, where the first PRACH configuration index is used to indicate at least two PRACH resource configurations, so that the UE selects, according to a channel characteristic value of the UE, a first PRACH resource configuration from the at least two PRACH resource configurations indicated by the first PRACH configuration index.

The detecting unit 702 is configured to detect, on a PRACH resource corresponding to each of the at least two PRACH resource configurations indicated by the first PRACH configuration index sent by the sending unit 701, a random access preamble sent by the UE.

Based on the foregoing technical solution, in the embodiment of the present invention, a base station sends a PRACH configuration index to all UEs in a cell, where the PRACH configuration index is used to indicate at least two PRACH resource configurations; and a UE selects, according to a channel characteristic value of the UE, a first PRACH resource configuration from the at least two PRACH resource configurations indicated by the first PRACH configuration index, and sends a random access preamble on a PRACH resource corresponding to the selected first PRACH resource configuration to the base station. The base station detects, on a PRACH resource corresponding to each of the at least two PRACH resource configurations, random access preambles sent by UEs having different channel characteristic values. Thereby, PRACH resource configuration efficiency is improved, and accuracy of receiving random access preambles by the base station is improved.

The base station 700 may implement each step relating to the base station in the methods in FIG. 1 to FIG. 5. For avoiding repetition, no further description is provided.

Optionally, in an embodiment, a channel characteristic may include one or more of the following: RSRP, RSRQ, path loss, CQI, and the like. It should be understood that the embodiment of the present invention is not limited thereto.

For a method for dividing channel characteristic values, reference may be made to the foregoing embodiment, and no further description is provided herein.

Optionally, in another embodiment, the base station may further include a storing unit 703, where the storing unit 703 is configured to store preset random access configuration information. The random access configuration information reflects a correspondence between each PRACH configuration index in at least one PRACH configuration index and at least two PRACH resource configurations indicated by each PRACH configuration index. Further, each of the at least two PRACH resource configurations indicated by each PRACH configuration index corresponds to a channel characteristic range.

Optionally, the sending unit 70 may be further configured to send correspondences between the at least two PRACH resource configurations indicated by each PRACH configuration index and the channel characteristic ranges to the UE.

Certainly, the base station and the UE may pre-agree on the correspondences between the at least two PRACH resource configurations indicated by each PRACH configuration index and the channel characteristic ranges. It should be understood that the embodiment of the present invention is not limited thereto.

Optionally, information of the PRACH resource corresponding to each PRACH resource configuration may include at least one of the following: a random access preamble format, a version, a PRACH resource period, a start position of the PRACH resource period, an offset between a position of the PRACH resource and the start position of the PRACH resource period, the position of the PRACH resource, a size of the PRACH resource, the format of the random access preamble sent on the PRACH resource, a PRACH resource density, a PRACH resource quantity, and a sequence number of a PRACH frequency-domain resource.

Optionally, the random access configuration information may further include a correspondence between each PRACH resource configuration and information of the PRACH resource corresponding to each PRACH resource configuration. For example, a random access configuration table may further reflect a correspondence between each PRACH configuration index in at least one PRACH configuration index and a version. For another example, the random access configuration table further reflects a correspondence between each PRACH configuration index in at least one PRACH configuration index and a position of a PRACH time-domain resource. It should be understood that the foregoing examples are only exemplary, but not intended to limit the scope of the present invention.

Optionally, the random access configuration information may be expressed in a table form.

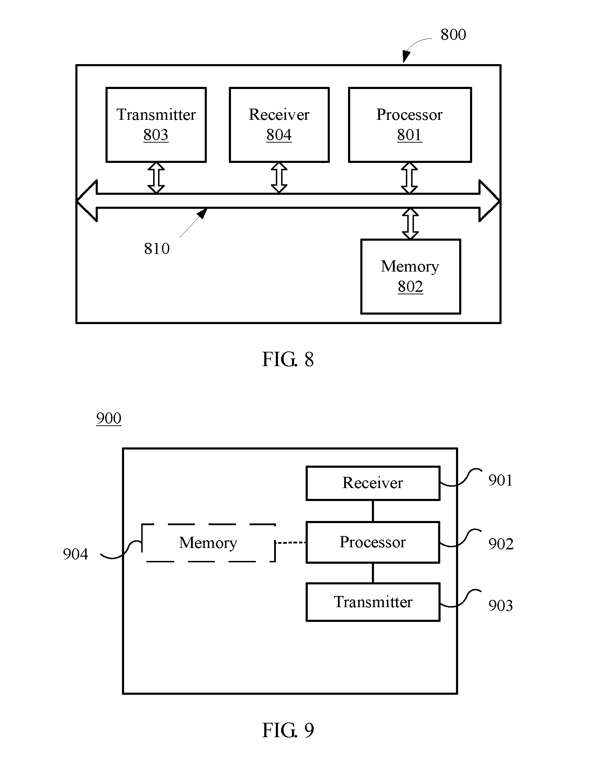

An embodiment of the present invention further provides an apparatus embodiment for implementing each step and method in the foregoing method embodiments. FIG. 8 shows an embodiment of a device. In this embodiment, a device 800 includes a processor 801, a memory 802, a transmitter 803, and a receiver 804. The processor 801 controls an operation of the device 800. The processor 801 may also be called a CPU (Central Processing Unit, central processing unit). The memory 802 may include a read-only memory and a random access memory, and provide an instruction and data to the processor 801. A part of the memory 802 may further include a non-volatile random access memory (NVRAM). The processor 801, memory 802, transmitter 803, and receiver 804 are coupled by a bus system 810, where the bus system 810 further includes a power bus, a control bus, and a status signal bus, in addition to a data bus. However, for clear description, various buses in the figure are marked as the bus system 810.

The foregoing methods disclosed in the embodiments of the present invention may be applied to the foregoing device 800. The processor 801 may be an integrated circuit chip, and has a signal processing capability. In an implementation process, each step of the foregoing methods may be completed by using an integrated logic circuit of hardware in the processor 801 or an instruction in a form of software.

Further, FIG. 9 is a structural block diagram of a user equipment according to an embodiment of the present invention. A user equipment 900 includes a receiver 901, a processor 902, and a transmitter 903.

The receiver 901 is configured to receive a first PRACH configuration index sent by a base station, where the first PRACH configuration index is used to indicate at least two PRACH resource configurations.

The processor 902 is configured to select, according to a channel characteristic value of the UE, a first PRACH resource configuration from the at least two PRACH resource configurations indicated by the first PRACH configuration index received by the receiver 901.

The transmitter 903 is configured to send a random access preamble on a PRACH resource corresponding to the first PRACH resource configuration selected by the processor 902 to the base station.

Based on the foregoing technical solutions, in the embodiments of the present invention, a UE receives a PRACH configuration index sent by a base station, where the PRACH configuration index is used to indicate at least two PRACH resource configurations; and the UE selects, according to a channel characteristic value of the UE, a first PRACH resource configuration from the at least two PRACH resource configurations indicated by the first PRACH configuration index, and sends a random access preamble on a PRACH resource corresponding to the selected first PRACH resource configuration to the base station. Therefore, for UEs having different channel characteristic values, PRACH resources corresponding to the channel characteristic values of the UEs and used to send random access preambles can be determined by using a same index, and thereby, PRACH resource configuration efficiency is improved, and accuracy of receiving random access preambles by the base station is improved.

The user equipment 900 may implement each step relating to the user equipment in the methods in FIG. 1 to FIG. 5. For avoiding repetition, no further description is provided.

Optionally, in an embodiment, a channel characteristic may include one or more of the following: RSRP, RSRQ, path loss, CQI, and the like. It should be understood that the embodiment of the present invention is not limited thereto.

For a method for dividing channel characteristic values, reference may be made to the foregoing embodiment, and no further description is provided herein.

Optionally, the processor 902 may be further configured to acquire the channel characteristic value of the UE. Specifically, a path loss value of the UE may be obtained by using the following method: obtaining an RSRP value through measurement, obtaining, by using a SIB2, power of a downlink CRS sent by the eNodeB, and obtaining the path loss value of the UE by calculating a difference between the power of the CRS and the RSRP value.

Optionally, in another embodiment, the user equipment 900 may further include a memory 904. The memory 904 is configured to store preset random access configuration information, or the receiver 901 may be further configured to receive random access configuration information sent by a network-side device. The random access configuration information reflects a correspondence between each PRACH configuration index in at least one PRACH configuration index and at least two PRACH resource configurations indicated by each PRACH configuration index. Further, each of the at least two PRACH resource configurations indicated by each PRACH configuration index corresponds to a channel characteristic range.

Optionally, the random access configuration information may further reflect correspondences between the at least two PRACH resource configurations indicated by each PRACH configuration index and the channel characteristic ranges. The processor 902 is specifically configured to: determine, according to the random access configuration information, the at least two PRACH resource configurations indicated by the first PRACH configuration index; and determine, according to the channel characteristic value of the UE, a PRACH resource configuration corresponding to a channel characteristic range that the channel characteristic value of the UE falls within, and use the PRACH resource configuration as the first PRACH resource configuration.

Further, the memory 904 stores the preset correspondences between the at least two PRACH resource configurations indicated by each PRACH configuration index and the channel characteristic ranges; or the receiver 901 may be further configured to acquire, from the network-side device, the correspondences between the at least two PRACH resource configurations indicated by each PRACH configuration index and the channel characteristic ranges.

Optionally, information of the PRACH resource corresponding to each PRACH resource configuration may include at least one of the following: a random access preamble format, a version, a PRACH resource period, a start position of the PRACH resource period, an offset between a position of the PRACH resource and the start position of the PRACH resource period, the position of the PRACH resource, a size of the PRACH resource, the format of the random access preamble sent on the PRACH resource, a PRACH resource density, a PRACH resource quantity, and a sequence number of a PRACH frequency-domain resource.

Optionally, the random access configuration information may further include a correspondence between each PRACH resource configuration and information of the PRACH resource corresponding to each PRACH resource configuration. For example, a random access configuration table may further reflect a correspondence between each PRACH configuration index in at least one PRACH configuration index and a version. For another example, the random access configuration table further reflects a correspondence between each PRACH configuration index in at least one PRACH configuration index and a position of a PRACH time-domain resource. It should be understood that the foregoing examples are only exemplary, but not intended to limit the scope of the present invention.

Optionally, the random access configuration information may be expressed in a table form.

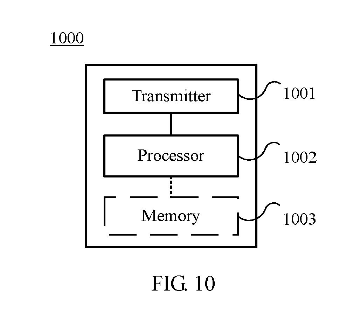

FIG. 10 is a structural block diagram of a base station according to an embodiment of the present invention. A base station 1000 includes a transmitter 1001 and a processor 1002.

The transmitter 1001 is configured to send a first PRACH configuration index to a UE, where the first PRACH configuration index is used to indicate at least two PRACH resource configurations, so that the UE selects, according to a channel characteristic value of the UE, a first PRACH resource configuration from the at least two PRACH resource configurations indicated by the first PRACH configuration index.

The processor 1002 is configured to detect, on a PRACH resource corresponding to each of the at least two PRACH resource configurations indicated by the first PRACH configuration index sent by the transmitter 1001, a random access preamble sent by the UE.

Based on the foregoing technical solution, in the embodiment of the present invention, a base station sends a PRACH configuration index to all UEs in a cell, where the PRACH configuration index is used to indicate at least two PRACH resource configurations; and a UE selects, according to a channel characteristic value of the UE, a first PRACH resource configuration from the at least two PRACH resource configurations indicated by the first PRACH configuration index, and sends a random access preamble on a PRACH resource corresponding to the selected first PRACH resource configuration to the base station. The base station detects, on a PRACH resource corresponding to each of the at least two PRACH resource configurations, random access preambles sent by UEs having different channel characteristic values. Thereby, PRACH resource configuration efficiency is improved, and accuracy of receiving random access preambles by the base station is improved.

The base station 1000 may implement each step relating to the base station in the methods in FIG. 1 to FIG. 5. For avoiding repetition, no further description is provided.

Optionally, in an embodiment, a channel characteristic may include one or more of the following: RSRP, RSRQ, path loss, CQI, and the like. It should be understood that the embodiment of the present invention is not limited thereto.

For a method for dividing channel characteristic values, reference may be made to the foregoing embodiment, and no further description is provided herein.

Optionally, in another embodiment, the base station 1000 may further include a memory 1003. The memory 1003 is configured to store preset random access configuration information, where the random access configuration information reflects a correspondence between each PRACH configuration index in at least one PRACH configuration index and at least two PRACH resource configurations indicated by each PRACH configuration index. Further, each of the at least two PRACH resource configurations indicated by each PRACH configuration index corresponds to a channel characteristic range.

Optionally, the transmitter 1001 may be further configured to send correspondences between the at least two PRACH resource configurations indicated by each PRACH configuration index and the channel characteristic ranges to the UE.

Certainly, the base station and the UE may pre-agree on the correspondences between the at least two PRACH resource configurations indicated by each PRACH configuration index and the channel characteristic ranges. It should be understood that the embodiment of the present invention is not limited thereto.

Optionally, information of the PRACH resource corresponding to each PRACH resource configuration may include at least one of the following: a random access preamble format, a version, a PRACH resource period, a start position of the PRACH resource period, an offset between a position of the PRACH resource and the start position of the PRACH resource period, the position of the PRACH resource, a size of the PRACH resource, the format of the random access preamble sent on the PRACH resource, a PRACH resource density, a PRACH resource quantity, and a sequence number of a PRACH frequency-domain resource.

Optionally, the random access configuration information may further include a correspondence between each PRACH resource configuration and information of the PRACH resource corresponding to each PRACH resource configuration. For example, a random access configuration table may further reflect a correspondence between each PRACH configuration index in at least one PRACH configuration index and a version. For another example, the random access configuration table further reflects a correspondence between each PRACH configuration index in at least one PRACH configuration index and a position of a PRACH time-domain resource. It should be understood that the foregoing examples are only exemplary, but not intended to limit the scope of the present invention.

Optionally, the random access configuration information may be expressed in a table form.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for sending a random access preamble, comprising:

   receiving, by a user equipment UE, a first physical random access channel PRACH configuration index sent by a base station, wherein the first PRACH configuration index is used to indicate at least two PRACH resource configurations;
   selecting, by the UE according to a channel characteristic value of the UE, a first PRACH resource configuration from the at least two PRACH resource configurations indicated by the first PRACH configuration index; and
   sending, by the UE to the base station, a random access preamble on a PRACH resource corresponding to the first PRACH resource configuration.

2. The method according to claim 1, wherein:

   the UE stores random access configuration information, or the UE receives random access configuration information sent by a network-side device; wherein
   the random access configuration information reflects a correspondence between each PRACH configuration index in at least one PRACH configuration index and at least two PRACH resource configurations indicated by each PRACH configuration index, and the at least one PRACH configuration index comprises the first PRACH configuration index.

3. The method according to claim 2, wherein each of the at least two PRACH resource configurations indicated by each PRACH configuration index corresponds to a channel characteristic range, and the selecting, by the UE according to a channel characteristic value of the UE, a first PRACH resource configuration from the at least two PRACH resource configurations indicated by the first PRACH configuration index comprises:

   determining, according to the random access configuration information, the at least two PRACH resource configurations indicated by the first PRACH configuration index; and
   determining, according to the channel characteristic value of the UE, a PRACH resource configuration corresponding to a channel characteristic range that the channel characteristic value of the UE falls within, and using the PRACH resource configuration as the first PRACH resource configuration.

4. The method according to claim 3, wherein:

   the UE stores correspondences between the at least two PRACH resource configurations indicated by each PRACH configuration index and channel characteristic ranges; or
   the UE acquires, from the network-side device, correspondences between the at least two PRACH resource configurations indicated by each PRACH configuration index and channel characteristic ranges.

5. The method according to any one of claims 1 to 4, wherein the random access configuration information is a random access configuration table.

6. The method according to any one of claims 1 to 5, wherein the random access configuration information comprises a correspondence between each PRACH resource configuration and a PRACH resource corresponding to the PRACH resource configuration.

7. A method for receiving a random access preamble, comprising:

   sending, by a base station, a first physical random access channel PRACH configuration index to a user equipment UE, wherein the first PRACH configuration index is used to indicate at least two PRACH resource configurations, so that the UE selects, according to a channel characteristic value of the UE, a first PRACH resource configuration from the at least two PRACH resource configurations indicated by the first PRACH configuration index; and
   detecting, by the base station on a PRACH resource corresponding to each of the at least two PRACH resource configurations, a random access preamble sent by the UE.

8. The method according to claim 7, wherein:

the base station stores random access configuration information, wherein the random access configuration information reflects a correspondence between each PRACH configuration index in at least one PRACH configuration index and at least two PRACH resource configurations indicated by each PRACH configuration index, and the at least one PRACH configuration index comprises the first PRACH configuration index.

9. The method according to claim 8, wherein each of the at least two PRACH resource configurations indicated by each PRACH configuration index corresponds to a channel characteristic range.

10. The method according to claim 9, wherein the method further comprises:

sending, by the base station, correspondences between the at least two PRACH resource configurations indicated by each PRACH configuration index and channel characteristic ranges to the UE.

11. The method according to any one of claims 7 to 10, wherein the random access configuration information is a random access configuration table.

12. The method according to any one of claims 7 to 11, wherein the random access configuration information comprises a correspondence between each PRACH resource configuration and a PRACH resource corresponding to the PRACH resource configuration.

13. A user equipment, comprising:

a receiving unit, configured to receive a first physical random access channel PRACH configuration index sent by a base station, wherein the first PRACH configuration index is used to indicate at least two PRACH resource configurations;
a selecting unit, configured to select, according to a channel characteristic value of the UE, a first PRACH resource configuration from the at least two PRACH resource configurations indicated by the first PRACH configuration index received by the receiving unit; and
a sending unit, configured to send a random access preamble on a PRACH resource corresponding to the first PRACH resource configuration selected by the selecting unit to the base station.

14. The user equipment according to claim 13, wherein the user equipment further comprises a storing unit, wherein the storing unit is configured to store random access configuration information; or
the receiving unit is further configured to receive random access configuration information sent by a network-side device; wherein
the random access configuration information reflects a correspondence between each PRACH configuration index in at least one PRACH configuration index and at least two PRACH resource configurations indicated by each PRACH configuration index.

15. The user equipment according to claim 14, wherein each of the at least two PRACH resource configurations indicated by each PRACH configuration index corresponds to a channel characteristic range; and
the selecting unit is specifically configured to: determine, according to the random access configuration information, the at least two PRACH resource configurations indicated by the first PRACH configuration index; and determine, according to the channel characteristic value of the UE, a PRACH resource configuration corresponding to a channel characteristic range that the channel characteristic value of the UE falls within, and use the PRACH resource configuration as the first PRACH resource configuration.

16. The user equipment according to claim 15, wherein:

the storing unit is further configured to store correspondences between the at least two PRACH resource configurations indicated by each PRACH configuration index and channel characteristic ranges; or
the receiving unit is further configured to acquire, from the network-side device, correspondences between the at least two PRACH resource configurations indicated by each PRACH configuration index and channel characteristic ranges.

17. The method according to any one of claims 13 to 16, wherein the random access configuration information is a random access configuration table.

**18.** The method according to any one of claims 13 to 17, wherein the random access configuration information comprises a correspondence between each PRACH resource configuration and a PRACH resource corresponding to the PRACH resource configuration.

**19.** Abase station, comprising:

a sending unit, configured to send a first physical random access channel PRACH configuration index to a user equipment UE, wherein the first PRACH configuration index is used to indicate at least two PRACH resource configurations, so that the UE selects, according to a channel characteristic value of the UE, a first PRACH resource configuration from the at least two PRACH resource configurations indicated by the first PRACH configuration index; and

a detecting unit, configured to detect, on a PRACH resource corresponding to each of the at least two PRACH resource configurations indicated by the first PRACH configuration index sent by the sending unit, a random access preamble sent by the UE.

**20.** The base station according to claim 19, wherein the base station further comprises a storing unit, wherein:

the storing unit is configured to store random access configuration information, wherein the random access configuration information reflects a correspondence between each PRACH configuration index in at least one PRACH configuration index and at least two PRACH resource configurations indicated by each PRACH configuration index.

**21.** The base station according to claim 20, wherein each of the at least two PRACH resource configurations indicated by each PRACH configuration index corresponds to a channel characteristic range.

**22.** The base station according to claim 21, wherein:

the sending unit is further configured to send correspondences between the at least two PRACH resource configurations indicated by each PRACH configuration index and channel characteristic ranges to the UE.

**23.** The method according to any one of claims 19 to 22, wherein the random access configuration information is a random access configuration table.

**24.** The method according to any one of claims 19 to 23, wherein the random access configuration information comprises a correspondence between each PRACH resource configuration and a PRACH resource corresponding to the PRACH resource configuration.

Receive a first physical random access channel PRACH configuration index sent by a base station, where the first PRACH configuration index is used to indicate at least two PRACH resource configurations — 101

Select, according to a channel characteristic value of the UE, a first PRACH resource configuration from the at least two PRACH resource configurations indicated by the first PRACH configuration index — 102

Send a random access preamble on a PRACH resource corresponding to the first PRACH resource configuration to the base station — 103

FIG. 1

Sequence repetition
for Ni times

| CP | Sequence | ...... | Sequence | Guard period |

FIG. 2A

Repetition of an entirety
for Ni times

| CP | Sequence | Guard period | ...... | CP | Sequence | Guard period |

One part

FIG. 2B

PRACH time-domain resource

| 1 | 0 | 0 | 0 | 0 | 0 | 0 | 0 |
|---|---|---|---|---|---|---|---|
| M subframes | M subframes | M subframes | M subframes | M subframes | M subframes | M subframes | M subframes |

FIG. 3A

PRACH time-domain resource

| 1 | 0 | 0 | 0 | 1 | 0 | 0 | 0 | 1 | 0 | 0 | 0 | 1 | 0 | 0 | 0 |
|---|---|---|---|---|---|---|---|---|---|---|---|---|---|---|---|
| M subframes | M subframes | M subframes | M subframes | M subframes | M subframes | M subframes | M subframes | M subframes | M subframes | M subframes | M subframes | M subframes | M subframes | M subframes | M subframes |

00          01          10          11

FIG. 3B

0           1          0          0      00000

M
subframes      M
subframes      M
subframes

| D | S | U | U | U | D | S | U | U | U | D | S | U | U | U | D | S | U | U | U | ... |

PRACH time-
domain resource

FIG. 3C

A base station sends a first physical random access channel PRACH
configuration index to a user equipment UE, where the first PRACH
configuration index is used to indicate at least two PRACH resource
configurations, so that the UE selects, according to a channel
characteristic value of the UE, a first PRACH resource configuration
from the at least two PRACH resource configurations indicated by the
first PRACH configuration index     401

The base station detects, on a PRACH resource corresponding to each of
the at least two PRACH resource configurations, a random access
preamble sent by the UE     402

FIG. 4

PRACH time-
domain resource

1      0      0      0      0      0      0      0

| M2 subframes | M2 subframes | M2 subframes | M2 subframes | M2 subframes | M2 subframes | M2 subframes | M2 subframes |
|---|---|---|---|---|---|---|---|

FIG. 5A

PRACH time-
domain resource

1  0  0  0  1  0  0  0  1  0  0  0  1  0  0  0

| M3 subframes | M3 subframes | M3 subframes | M3 subframes | M3 subframes | M3 subframes | M3 subframes | M3 subframes | M3 subframes | M3 subframes | M3 subframes | M3 subframes | M3 subframes | M3 subframes | M3 subframes | M3 subframes |
|---|---|---|---|---|---|---|---|---|---|---|---|---|---|---|---|

00            01            10            11

FIG. 5B

600

Receiving unit — 601

Selecting unit — 602

604 — Storing unit

Sending unit — 603

FIG. 6

700

Sending unit — 701

Detecting unit — 702

Storing unit — 703

FIG. 7

800

| | | |
|---|---|---|
| Transmitter 803 | Receiver 804 | Processor 801 |

810

Memory 802

FIG. 8

900

| Receiver | 901 |
|---|---|
| Memory | Processor | 902 |
| | Transmitter | 903 |

904

FIG. 9

1000

FIG. 10

<table>
<tr><td colspan="2">**INTERNATIONAL SEARCH REPORT**</td><td>International application No.<br>PCT/CN2013/073876</td></tr>
</table>

**A. CLASSIFICATION OF SUBJECT MATTER**

H04W 72/04 (2009.01) i

According to International Patent Classification (IPC) or to both national classification and IPC

**B. FIELDS SEARCHED**

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

CNKI, WPI, EPODOC, CNPAT, GOOGLE: random access preamble, UE, basestation, index, resource, mapping, quality, state, channel, correspondence

**C. DOCUMENTS CONSIDERED TO BE RELEVANT**

| Category* | Citation of document, with indication, where appropriate, of the relevant passages | Relevant to claim No. |
|---|---|---|
| Y | US 2010/0110994 A1 (MOTOROLA INC.) 06 May 2010 (06.05.2010) description, paragraphs [0035]-[0039], and figures 10 and 11 | 1-24 |
| Y | CN 102480794 A (ZTE CORPORATION) 30 May 2012 (30.05.2012) description, pages 5-9 | 1-24 |
| A | CN 101686544 A (ZTE CORPORATION) 31 March 2010 (31.03.2010) the whole document | 1-24 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 16 December 2013 (16.12.2013) | 16 January 2014 (16.01.2014) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WU, Xin<br><br>Telephone No. (86-10) 62413703 |
|---|---|

Form PCT/ISA /210 (second sheet) (July 2009)

## INTERNATIONAL SEARCH REPORT
Information on patent family members

| | International application No. |
|---|---|
| | PCT/CN2013/073876 |

| Patent Documents referred in the Report | Publication Date | Patent Family | Publication Date |
|---|---|---|---|
| US 2010/0110994 A1 | 06.05.2010 | None | |
| CN 102480794 A | 30.05.2012 | WO 2012068785 A1 | 31.05.2012 |
| CN 101686544 A | 31.03.2010 | WO 2010031311 A1 | 25.03.2010 |
| | | RU 2010136370 A | 10.03.2012 |
| | | KR 20110003362 A | 11.01.2011 |
| | | US 2011013542 A1 | 20.01.2011 |
| | | CA 2717106 A1 | 25.03.2010 |
| | | INCHENP 201005763 E | 03.06.2011 |
| | | EP 2341725 A1 | 06.07.2011 |
| | | JP 2011520366 A | 14.07.2011 |

Form PCT/ISA /210 (patent family annex) (July 2009)